(19) Europäisches Patentamt
European Patent Office
Office européen des brevets

(11) **EP 4 383 628 A1**

(12) **EUROPEAN PATENT APPLICATION**
published in accordance with Art. 153(4) EPC

(43) Date of publication:
**12.06.2024 Bulletin 2024/24**

(21) Application number: **22852262.9**

(22) Date of filing: **03.08.2022**

(51) International Patent Classification (IPC):
***H04L 5/00*** *(2006.01)*

(52) Cooperative Patent Classification (CPC):
**H04L 5/00**

(86) International application number:
**PCT/CN2022/110054**

(87) International publication number:
**WO 2023/011550 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021 CN 202110927259**

(71) Applicant: **Datang Mobile Communications
Equipment Co., Ltd.
Beijing 100085 (CN)**

(72) Inventor: **LIU, Zhengxuan
Beijing 100085 (CN)**

(74) Representative: **Studio Torta S.p.A.
Via Viotti, 9
10121 Torino (IT)**

(54) **SIGNAL TRANSMISSION METHOD AND APPARATUS, USER EQUIPMENT, NETWORK DEVICE, AND STORAGE MEDIUM**

(57) The present disclosure provides a signal transmission method, a signal transmission device, a UE, a network device and a storage medium. The signal transmission method includes: determining a start position parameter of a partial frequency bandwidth corresponding to each OFDM symbol in accordance with a relative index of an SRS symbol and a partial frequency bandwidth parameter configured by a network device; and determining a start position in an SRS frequency-domain resource bandwidth corresponding to each OFDM symbol in accordance with each start position parameter, and transmitting an SRS resource in accordance with the start position.

determining a start position parameter of a partial frequency bandwidth corresponding to each OFDM symbol in accordance with a relative index of an SRS symbol and a partial frequency bandwidth parameter configured by a network device ⟶ 101

determining a start position in an SRS frequency-domain resource bandwidth corresponding to each OFDM symbol in accordance with each start position parameter, and transmitting an SRS resource in accordance with the start position ⟶ 102

**FIG. 1**

**Description**

**CROSS-REFERENCE TO RELATED APPLICATION**

This application claims a priority of the Chinese patent application No. 202110927259.0 filed on August 6, 2021, which is incorporated herein by reference in its entirety.

**TECHNICAL FIELD**

The present disclosure relates to the field of mobile communication technology, in particular to a signal transmission method, a signal transmission device, a User Equipment (UE), a network device and a storage medium.

**BACKGROUND**

In a mobile communication system, a network side performs uplink channel estimation using a Sounding Reference Signal (SRS), so as to transmit uplink or downlink data. One SRS resource includes 1, 2, 4, 8 or 12 symbols, and it is reported by a UE to the network side within one slot periodically, semi-persistently or aperiodically, or in a hopping or non-hopping manner.

In the related art, the SRS is supported to be transmitted using a partial frequency bandwidth (i.e., partial frequency sounding), so as to enhance the SRS capacity and the SRS coverage range. However, in the transmission mode using the partial frequency bandwidth, SRS is not transmitted on the partial bandwidth. In order to solve this problem, the network side calculates channel information through an interpolation algorithm on the partial bandwidth where the SRS is not transmitted. At this time, on one hand, a calculation complexity at the network side increases, such that the channel accuracy calculated at the network side degrades. On the other hand, the SRS is not transmitted on a part of resources within a very long time period, such that the data transmission performance deteriorates.

Hence, there is an urgent need to provide a scheme for transmitting the SRS on the partial bandwidth.

**SUMMARY**

An object of the present disclosure is to provide a signal transmission method, a signal transmission device, a UE, a network device and a storage medium, so as to solve the problem in the related art where the SRS is not transmitted on the partial bandwidth in a transmission mode using the partial frequency bandwidth.

In one aspect, the present disclosure provides in some embodiments a signal transmission method, including: determining a start position parameter of a partial frequency bandwidth corresponding to each Orthogonal Frequency Division Multiplexing (OFDM) symbol in accordance with a relative index of an SRS symbol and a partial frequency bandwidth parameter configured by a network device; and determining a start position in an SRS frequency-domain resource bandwidth corresponding to each OFDM symbol in accordance with each start position parameter, and transmitting an SRS resource in accordance with the start position.

In some possible embodiments of the present disclosure, the relative index of the SRS symbol indicates a position of an OFDM symbol for an SRS transmitted in each hop in SRS hopping transmission, or a position of an OFDM symbol for an SRS transmitted in SRS non-hopping transmission.

In some possible embodiments of the present disclosure, the partial frequency bandwidth parameter includes at least more than one of the quantity of repeated transmission symbols, a partial frequency bandwidth transmission factor, a start position index factor, or a resource bandwidth parameter.

In some possible embodiments of the present disclosure, the determining the start position parameter of the partial frequency bandwidth corresponding to each OFDM symbol in accordance with the relative index of the SRS symbol and the partial frequency bandwidth parameter configured by the network device includes: determining an index of an initial Resource Block (RB) for the SRS resource in the SRS frequency-domain resource bandwidth corresponding to each OFDM symbol in accordance with the relative index of the SRS symbol and the partial frequency bandwidth parameter; and determining the start position parameter of the partial frequency bandwidth corresponding to each OFDM symbol in accordance with the index of the initial RB.

In some possible embodiments of the present disclosure, the determining the index of the initial RB for the SRS resource in the SRS frequency-domain resource bandwidth corresponding to each OFDM symbol in accordance with the relative index of the SRS symbol and the partial frequency bandwidth parameter includes determining the index of the initial RB in accordance with the relative index of the SRS symbol, the partial frequency bandwidth parameter and a target data relation, the target data relation includes a first data relation or a second data relation, the first data relation includes $N_{offset} = \frac{\left(k_F + l'_{offset}\right) \bmod P_F}{P_F} m_{SRS,\ B_{SRS}}$, where $N_{offset}$ represents the index of the initial RB, $l'_{offset}$ represents the relative index of the SRS symbol, mod represents a modulo operation, $m_{SRS,\ B_{SRS}}$ represents the resource bandwidth parameter, $P_F$ represents the partial frequency bandwidth transmission factor and $k_F$ represents the start position index factor, and the second data relation includes $N_{offset} =$

$$\frac{\left(k_F + \left\lfloor \frac{l'_{offset}}{R} \right\rfloor + \left\lfloor \frac{N^{hop}_{symb}}{R} \right\rfloor * (i \bmod N_{max})\right) \bmod P_F}{P_F} m_{SRS,\ B_{SRS}}$$, where i represents an ith transmission period for the

SRS resource, $N_{max}$ represents the maximum quantity of transmission periods, $N_{max} = \left\lceil \frac{P_F R}{N^{hop}_{symb}} \right\rceil$, $\lceil x \rceil$ represents a round-up operation on x, $\lfloor x \rfloor$ represents a round-down operation on x, $N^{hop}_{symb}$ represents the quantity of OFDM symbols in each hop in each hopping transmission or the quantity of OFDM symbols included in each SRS resource in the non-hopping transmission, and $R$ represents the quantity of repeated transmission symbols.

In some possible embodiments of the present disclosure, prior to determining the start position parameter of the partial frequency bandwidth corresponding to each OFDM symbol in accordance with the relative index of the SRS symbol and the partial frequency bandwidth parameter configured by the network device, the signal transmission method further includes receiving target indication information, and the target indication information is used to perform at least one of: indicating a UE to set the quantity of repeated transmission symbols as a first predetermined value; indicating the UE that a hopping function for the index of the initial RB is enabled; or indicating a value of the partial frequency bandwidth transmission factor.

In another aspect, the present disclosure provides in some embodiments a signal transmission method, including configuring a partial frequency bandwidth parameter for a UE, and indicating the UE to determine a start position parameter of a partial frequency bandwidth corresponding to each OFDM symbol in accordance with a relative index of an SRS symbol and the partial frequency bandwidth parameter configured by a network device, determine a start position in an SRS frequency-domain resource bandwidth corresponding to each OFDM symbol in accordance with the start position parameter, and transmit an SRS resource in accordance with the start position.

In some possible embodiments of the present disclosure, the partial frequency bandwidth parameter includes at least more than one of the quantity of repeated transmission symbols, a partial frequency bandwidth transmission factor, a start position index factor, or a resource bandwidth parameter.

In some possible embodiments of the present disclosure, there is a target data relation among the relative index of the SRS symbol, the partial frequency bandwidth parameter and the index of the initial RB.

In some possible embodiments of the present disclosure, the target data relation includes a first data relation or a second data relation, the first data relation includes $N_{offset} = \frac{\left(k_F + l'_{offset}\right) \bmod P_F}{P_F} m_{SRS,\ B_{SRS}}$, where $N_{offset}$ represents the index of the initial RB, $l'_{offset}$ represents the relative index of the SRS symbol, mod represents a modulo operation, $m_{SRS,\ B_{SRS}}$ represents the resource bandwidth parameter, $P_F$ represents the partial frequency bandwidth transmission factor and $k_F$ represents the start position index factor, and the second data relation includes

$$N_{offset} = \frac{\left(k_F + \left\lfloor \frac{l'_{offset}}{R} \right\rfloor + \left\lfloor \frac{N^{hop}_{symb}}{R} \right\rfloor * (i \bmod N_{max})\right) \bmod P_F}{P_F} m_{SRS,\ B_{SRS}}$$, where i represents an ith transmission period for the SRS resource, $N_{max}$ represents the maximum quantity of transmission periods, $N_{max} = \left\lceil \frac{P_F R}{N^{hop}_{symb}} \right\rceil$, $\lceil x \rceil$ represents a round-up operation on x, $\lfloor x \rfloor$ represents a round-down operation on x, $N^{hop}_{symb}$ represents the quantity of OFDM symbols in each hop in each hopping transmission or the quantity of OFDM symbols included in each SRS resource in the non-hopping transmission, and R represents the quantity of repeated transmission symbols.

In some possible embodiments of the present disclosure, the indicating the UE to determine the start position parameter of the partial frequency bandwidth corresponding to each OFDM symbol in accordance with the relative index of the SRS symbol and the partial frequency bandwidth parameter configured by the network device includes transmitting target indication information to the UE, the target indication information is used to indicate the UE to determine the start position parameter of the partial frequency bandwidth corresponding to each OFDM symbol in accordance with the relative index of the SRS symbol and the partial frequency bandwidth parameter configured by the network device, and the target indication information is used to perform at least one of: indicating the UE to set the quantity of repeated transmission symbols as a first predetermined value; indicating the UE that a hopping function for the index of the initial RB is enabled; or indicating a value of the partial frequency bandwidth transmission factor.

In some possible embodiments of the present disclosure, the target indication information is carried in at least one of Radio Resource Control (RRC) signaling, Medium Access Control Control Element (MAC-CE) signaling or Downlink Control Information (DCI) signaling.

In some possible embodiments of the present disclosure, subsequent to configuring the partial frequency bandwidth parameter for the UE, the signal transmission method further includes receiving the SRS resource at the start position in the SRS frequency-domain resource bandwidth corresponding to each OFDM symbol.

In yet another aspect, the present disclosure provides in some embodiments a UE, including a memory, a transceiver and a processor. The memory is configured to store therein a computer program. The transceiver is configured to transmit and receive data under the control of the processor. The processor is configured to read the computer program in the memory, so as to perform the following operations: determining a start position parameter of a partial frequency bandwidth corresponding to each OFDM symbol in accordance with a relative index of an SRS symbol and a partial frequency bandwidth parameter configured by a network device; and determining a start position in an SRS frequency-domain resource bandwidth corresponding to each OFDM symbol in accordance with each start position parameter, and transmitting an SRS resource in accordance with the start position.

In some possible embodiments of the present disclosure, the relative index of the SRS symbol indicates a position of an OFDM symbol for an SRS transmitted in each hop in SRS hopping transmission, or a position of an OFDM symbol for an SRS transmitted in SRS non-hopping transmission.

In some possible embodiments of the present disclosure, the partial frequency bandwidth parameter includes at least more than one of the quantity of repeated transmission symbols, a partial frequency bandwidth transmission factor, a start position index factor, or a resource bandwidth parameter.

In some possible embodiments of the present disclosure, the determining the start position parameter of the partial frequency bandwidth corresponding to each OFDM symbol in accordance with the relative index of the SRS symbol and the partial frequency bandwidth parameter configured by the network device includes: determining an index of an initial RB for the SRS resource in the SRS frequency-domain resource bandwidth corresponding to each OFDM symbol in accordance with the relative index of the SRS symbol and the partial frequency bandwidth parameter; and determining the start position parameter of the partial frequency bandwidth corresponding to each OFDM symbol in accordance with the index of the initial RB.

In some possible embodiments of the present disclosure, the determining the index of the initial RB for the SRS resource in the SRS frequency-domain resource bandwidth corresponding to each OFDM symbol in accordance with the relative index of the SRS symbol and the partial frequency bandwidth parameter includes determining the index of the initial RB in accordance with the relative index of the SRS symbol, the partial frequency bandwidth parameter and a target data relation, the target data relation includes a first data relation or a second data relation, the first data relation

includes $N_{offset} = \dfrac{\left(k_F + l'_{offset}\right) \bmod P_F}{P_F} m_{SRS,\ B_{SRS}}$ , where $N_{offset}$ represents the index of the initial RB, $l'_{offset}$ represents the relative index of the SRS symbol, mod represents a modulo operation, $m_{SRS,\ B_{SRS}}$ represents the resource bandwidth parameter, $P_F$ represents the partial frequency bandwidth transmission factor and $k_F$ represents the start position index factor, and the second data relation includes $N_{offset} =$

$$\dfrac{\left(k_F + \left\lfloor \dfrac{l'_{offset}}{R}\right\rfloor + \left\lfloor \dfrac{N^{hop}_{symb}}{R}\right\rfloor * (i \bmod N_{max})\right) \bmod P_F}{P_F} m_{SRS,\ B_{SRS}}$$ , where i represents an ith transmission period for the

SRS resource, $N_{max}$ represents the maximum quantity of transmission periods, $N_{max} = \left\lceil \dfrac{P_F R}{N_{symb}^{hop}} \right\rceil$, $\lfloor x \rfloor$ represents a round-up operation on x, $\lfloor x \rfloor$ represents a round-down operation on x, $N_{symb}^{hop}$ represents the quantity of OFDM symbols in each hop in each hopping transmission or the quantity of OFDM symbols included in each SRS resource in the non-hopping transmission, and $R$ represents the quantity of repeated transmission symbols.

In some possible embodiments of the present disclosure, prior to determining the start position parameter of the partial frequency bandwidth corresponding to each OFDM symbol in accordance with the relative index of the SRS symbol and the partial frequency bandwidth parameter configured by the network device, the processor is further configured to receive target indication information, and the target indication information is used to perform at least one of: indicating the UE to set the quantity of repeated transmission symbols as a first predetermined value; indicating the UE that a hopping function for the index of the initial RB is enabled; or indicating a value of the partial frequency bandwidth transmission factor.

In still yet another aspect, the present disclosure provides in some embodiments a network device, including a memory, a transceiver and a processor. The memory is configured to store therein a computer program. The transceiver is configured to transmit and receive data under the control of the processor. The processor is configured to read the computer program in the memory so as to configure a partial frequency bandwidth parameter for a UE, and indicate the UE to determine a start position parameter of a partial frequency bandwidth corresponding to each OFDM symbol in accordance with a relative index of an SRS symbol and the partial frequency bandwidth parameter configured by a network device, determine a start position in an SRS frequency-domain resource bandwidth corresponding to each OFDM symbol in accordance with the start position parameter, and transmit an SRS resource in accordance with the start position.

In some possible embodiments of the present disclosure, the partial frequency bandwidth parameter includes at least more than one of the quantity of repeated transmission symbols, a partial frequency bandwidth transmission factor, a start position index factor, or a resource bandwidth parameter.

In some possible embodiments of the present disclosure, there is a target data relation among the relative index of the SRS symbol, the partial frequency bandwidth parameter and the index of the initial RB, the target data relation includes a first data relation or a second data relation, the first data relation includes

$$N_{offset} = \frac{\left(k_F + l'_{offset}\right) \bmod P_F}{P_F} m_{SRS, B_{SRS}}$$

, where $N_{offset}$ represents the index of the initial RB, $l'_{offset}$ represents the relative index of the SRS symbol, mod represents a modulo operation, $m_{SRS, B_{SRS}}$ represents the resource bandwidth parameter, $P_F$ represents the partial frequency bandwidth transmission factor and $k_F$ represents the start position index factor, and the second data relation includes $N_{offset} =$

$$\frac{\left(k_F + \left\lceil \dfrac{l'_{offset}}{R} \right\rceil + \left\lfloor \dfrac{N_{symb}^{hop}}{R} \right\rfloor * (i \bmod N_{max})\right) \bmod P_F}{P_F} m_{SRS, B_{SRS}}$$

, where i represents an i$^{th}$ transmission period for the SRS resource, $N_{max}$ represents the maximum quantity of transmission periods, $N_{max} = \left\lceil \dfrac{P_F R}{N_{symb}^{hop}} \right\rceil$, $\lfloor x \rfloor$ represents a round-up operation on x, $\lfloor x \rfloor$ represents a round-down operation on x, $N_{symb}^{hop}$ represents the quantity of OFDM symbols in each hop in each hopping transmission or the quantity of OFDM symbols included in each SRS resource in the non-hopping transmission, and $R$ represents the quantity of repeated transmission symbols.

In some possible embodiments of the present disclosure, when the UE is indicated to determine the start position parameter of the partial frequency bandwidth corresponding to each OFDM symbol in accordance with the relative index of the SRS symbol and the partial frequency bandwidth parameter configured by the network device, the processor is configured to transmit target indication information to the UE, the target indication information is used to indicate the UE to determine the start position parameter of the partial frequency bandwidth corresponding to each OFDM symbol in accordance with the relative index of the SRS symbol and the partial frequency bandwidth parameter configured by the network device, and the target indication information is used to perform at least one of: indicating the UE to set the quantity of repeated transmission symbols as a first predetermined value; indicating the UE that a hopping function for the index of the initial RB is enabled; or indicating a value of the partial frequency bandwidth transmission factor.

In some possible embodiments of the present disclosure, the target indication information is carried in at least one of RRC signaling, MAC-CE signaling or DCI signaling.

In some possible embodiments of the present disclosure, after the partial frequency bandwidth parameter is configured for the UE, the processor is configured to receive the SRS resource at the start position in the SRS frequency-domain resource bandwidth corresponding to each OFDM symbol.

In still yet another aspect, the present disclosure provides in some embodiments a signal transmission device, including: a parameter determination module configured to determine a start position parameter of a partial frequency bandwidth corresponding to each OFDM symbol in accordance with a relative index of an SRS symbol and a partial frequency bandwidth parameter configured by a network device; and a position determination module configured to determine a start position in an SRS frequency-domain resource bandwidth corresponding to each OFDM symbol in accordance with each start position parameter, and transmit an SRS resource in accordance with the start position.

In some possible embodiments of the present disclosure, the relative index of the SRS symbol indicates a position of an OFDM symbol for an SRS transmitted in each hop in SRS hopping transmission, or a position of an OFDM symbol for an SRS transmitted in SRS non-hopping transmission.

In some possible embodiments of the present disclosure, the partial frequency bandwidth parameter includes at least more than one of the quantity of repeated transmission symbols, a partial frequency bandwidth transmission factor, a start position index factor, or a resource bandwidth parameter.

In some possible embodiments of the present disclosure, when determining the start position parameter of the partial frequency bandwidth corresponding to each OFDM symbol in accordance with the relative index of the SRS symbol and the partial frequency bandwidth parameter configured by the network device, the parameter determination module includes: a first determination sub-module configured to determine an index of an initial Resource Block (RB) for the SRS resource in the SRS frequency-domain resource bandwidth corresponding to each OFDM symbol in accordance with the relative index of the SRS symbol and the partial frequency bandwidth parameter; and a second determination sub-module configured to determine the start position parameter of the partial frequency bandwidth corresponding to each OFDM symbol in accordance with the index of the initial RB.

In some possible embodiments of the present disclosure, when determining the index of the initial RB for the SRS resource in the SRS frequency-domain resource bandwidth corresponding to each OFDM symbol in accordance with the relative index of the SRS symbol and the partial frequency bandwidth parameter, the first determination sub-module is configured to determine the index of the initial RB in accordance with the relative index of the SRS symbol, the partial frequency bandwidth parameter and a target data relation, the target data relation includes a first data relation or a second data relation, the first data relation includes $N_{offset} = \dfrac{\left(k_F + l'_{offset}\right) \bmod P_F}{P_F} m_{SRS,\ B_{SRS}}$ , where $N_{offset}$ represents the index of the initial RB, $l'_{offset}$ represents the relative index of the SRS symbol, mod represents a modulo operation, $m_{SRS,\ B_{SRS}}$ represents the resource bandwidth parameter, $P_F$ represents the partial frequency bandwidth transmission factor and $k_F$ represents the start position index factor, and the second data relation includes

$$N_{offset} = \frac{\left(k_F + \left\lfloor \dfrac{l'_{offset}}{R} \right\rfloor + \left\lfloor \dfrac{N^{hop}_{symb}}{R} \right\rfloor * (i \bmod N_{max})\right) \bmod P_F}{P_F} m_{SRS,\ B_{SRS}}$$

, where i represents an $i^{th}$ transmission period for the SRS resource, $N_{max}$ represents the maximum quantity of transmission periods, $N_{max} = \left\lceil \dfrac{P_F R}{N^{hop}_{symb}} \right\rceil$, $\lceil x \rceil$ represents a round-up operation on x, $\lfloor x \rfloor$ represents a round-down operation on x, $N^{hop}_{symb}$ represents the quantity of OFDM symbols in each hop in each hopping transmission or the quantity of OFDM symbols included in each SRS resource in the non-hopping transmission, and R represents the quantity of repeated transmission symbols.

In some possible embodiments of the present disclosure, when determining the start position parameter of the partial frequency bandwidth corresponding to each OFDM symbol in accordance with the relative index of the SRS symbol and the partial frequency bandwidth parameter configured by the network device, the parameter determination module includes: a reception sub-module configured to receive target indication information; and a response sub-module configured to determine the start position parameter of the partial frequency bandwidth corresponding to each OFDM symbol in response to the target indication information in accordance with the relative index of the SRS symbol and the partial frequency bandwidth parameter configured by the network device. The target indication information is used to perform at least one of: indicating a UE to set the quantity of repeated transmission symbols as a first predetermined value; indicating the UE that a hopping function for the index of the initial RB is enabled; or indicating a value of the partial frequency bandwidth transmission factor.

In still yet another aspect, the present disclosure provides in some embodiments a signal transmission device, including a configuration module configured to configure a partial frequency bandwidth parameter for a UE, and indicate the UE to determine a start position parameter of a partial frequency bandwidth corresponding to each OFDM symbol in accordance with a relative index of an SRS symbol and the partial frequency bandwidth parameter configured by a network device, determine a start position in an SRS frequency-domain resource bandwidth corresponding to each OFDM symbol in accordance with the start position parameter, and transmit an SRS resource in accordance with the start position.

In some possible embodiments of the present disclosure, the partial frequency bandwidth parameter includes at least more than one of the quantity of repeated transmission symbols, a partial frequency bandwidth transmission factor, a start position index factor, or a resource bandwidth parameter.

In some possible embodiments of the present disclosure, there is a target data relation among the relative index of the SRS symbol, the partial frequency bandwidth parameter and the index of the initial RB, the target data relation includes a first data relation or a second data relation, the first data relation includes

$$N_{offset} = \frac{\left(k_F + l'_{offset}\right) \bmod P_F}{P_F} m_{SRS, B_{SRS}}$$

, where $N_{offset}$ represents the index of the initial RB, $l'_{offset}$ represents the relative index of the SRS symbol, mod represents a modulo operation, $m_{SRS, B_{SRS}}$ represents the resource bandwidth parameter, $P_F$ represents the partial frequency bandwidth transmission factor and $k_F$ represents the start position index factor, and the second data relation includes $N_{offset} =$

$$\frac{\left(\left(k_F + \left\lfloor \frac{l'_{offset}}{R} \right\rfloor + \left\lfloor \frac{N_{symb}^{hop}}{R} \right\rfloor * (i \bmod N_{max})\right) \bmod P_F\right)}{P_F} m_{SRS, B_{SRS}}$$

, where i represents an ith transmission period for the SRS resource, $N_{max}$ represents the maximum quantity of transmission periods, $N_{max} = \left\lceil \frac{P_F R}{N_{symb}^{hop}} \right\rceil$, $\lceil x \rceil$ represents a round-up operation on x, $\lfloor x \rfloor$ represents a round-down operation on x, $N_{symb}^{hop}$ represents the quantity of OFDM symbols in each hop in each hopping transmission or the quantity of OFDM symbols included in each SRS resource in the non-hopping transmission, and R represents the quantity of repeated transmission symbols.

In some possible embodiments of the present disclosure, the configuration module includes an indication submodule configured to transmit target indication information to the UE, the target indication information is used to indicate the UE to determine the start position parameter of the partial frequency bandwidth corresponding to each OFDM symbol in accordance with the relative index of the SRS symbol and the partial frequency bandwidth parameter configured by the network device, and the target indication information is used to perform at least one of: indicating the UE to set the quantity of repeated transmission symbols as a first predetermined value; indicating the UE that a hopping function for the index of the initial RB is enabled; or indicating a value of the partial frequency bandwidth transmission factor.

In some possible embodiments of the present disclosure, the target indication information is carried in at least one of RRC signaling, MAC-CE signaling or DCI signaling.

In some possible embodiments of the present disclosure, the signal transmission device includes an SRS reception module configured to receive the SRS resource at the start position in the SRS frequency-domain resource bandwidth corresponding to each OFDM symbol.

In still yet another aspect, the present disclosure provides in some embodiments an electronic device, including a memory, a processor, and a computer program stored in the memory and executed by the processor. The processor is configured to execute the computer program so as to implement the steps in the above-mentioned methods.

In still yet another aspect, the present disclosure provides in some embodiments a processor-readable storage medium storing therein a computer program. The computer program is executed by a processor so as to implement the steps in the above-mentioned methods.

According to the embodiments of the present disclosure, the start position parameter of the partial frequency bandwidth corresponding to each OFDM symbol is determined in accordance with the relative index of the SRS symbol and the partial frequency bandwidth parameter configured by the network device. Then, the start position in the SRS frequency-domain resource bandwidth corresponding to each OFDM symbol is determined in accordance with each start position parameter, and the SRS resource is transmitted in accordance with the start position. Through dynamically changing the start position of the partial frequency bandwidth, the SRSs are transmitted on an entire uplink bandwidth. As a result, it is able for the network device to estimate channel information on the uplink bandwidth in accordance with the SRSs received on the entire bandwidth, thereby to improve the accuracy of the uplink channel estimation and the data transmission performance.

## BRIEF DESCRIPTION OF THE DRAWINGS

In order to illustrate the technical solutions of the present disclosure in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.

FIG. 1 is a flow chart of a signal transmission method according to one embodiment of the present disclosure;
FIG. 2 is a schematic view showing a first instance according to one embodiment of the present disclosure;
FIG. 3 is a schematic view showing a second instance according to one embodiment of the present disclosure;
FIG. 4 is another schematic view showing the second instance according to one embodiment of the present disclosure;
FIG. 5 is a schematic view showing a third instance according to one embodiment of the present disclosure;
FIG. 6 is a schematic view showing a fourth instance according to one embodiment of the present disclosure;
FIG. 7 is another schematic view showing the signal transmission method according to one embodiment of the present disclosure;
FIG. 8 is a block diagram of a signal transmission device according to one embodiment of the present disclosure;
FIG. 9 is another block diagram of the signal transmission device according to one embodiment of the present disclosure;
FIG. 10 is a block diagram of a UE according to one embodiment of the present disclosure; and
FIG. 11 is a block diagram of a network device according to one embodiment of the present disclosure.

## DETAILED DESCRIPTION

The expression "and/or" is merely used to describe the relationship between objects, and it includes three relationships. For example, "A and/or B" may represent that, there is only A, there are both A and B, and there is only B. Further, the symbol "/" usually refers to "or".

The expression "a plurality of" refers to two or more, and the other quantifiers are similar.

An object of the present disclosure is to provide a signal transmission method, a signal transmission device, a UE, a network device and a storage medium, so as to solve the problem in the related art where an SRS is not transmitted on a partial bandwidth in a transmission mode using a partial frequency bandwidth.

The method and the device are provided on the basis of a same inventive concept, and a principle of the method for solving the problem is similar to that of the device, so the implementation of the device may refer to that of the method.

Schemes in the embodiments of the present disclosure may be applied to various systems, especially a 5G system, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS).

The terminal device (UE) involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be particularly defined herein.

The network device of the core network involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

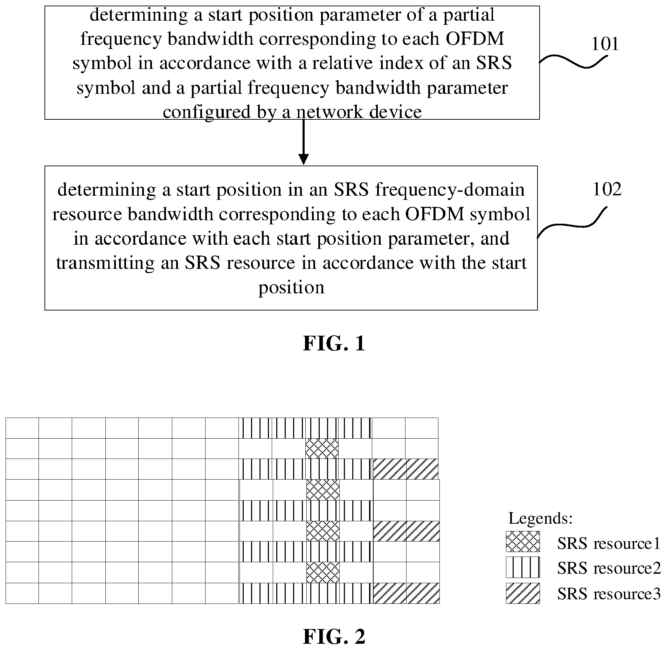

As shown in FIG. 1, the present disclosure provides in some embodiments a signal transmission method which is executed by any electronic device, e.g., a UE. For ease of description, the method will be described hereinafter when it is executed by the UE.

As shown in FIG. 1, the signal transmission method includes the following steps.

Step 101: determining a start position parameter of a partial frequency bandwidth corresponding to each OFDM symbol in accordance with a relative index of an SRS symbol and a partial frequency bandwidth parameter configured by a network device.

One SRS resource is transmitted on N ymb consecutive OFDM symbols, where $N_{symb}^{SRS}$ is 1, 2, 4 or any other value. As a first instance, as shown in FIG. 2, each rectangle represents an OFDM symbols, an SRS resourcel occupies one OFDM symbol, an SRS resource2 occupies four OFDM symbols, and an SRS resources occupies two OFDM symbols. Through the transmission of one SRS resource on a plurality of OFDM symbols, it is able to increase the coverage of an SRS, and achieve the hopping within one slot (i.e., intra-slot hopping) as well as the hopping within slots (i.e., inter-slot hopping).

The network device (i.e., a network side) configures the partial frequency bandwidth parameter for the UE, and the UE determines the start position parameter of the partial frequency bandwidth corresponding to each OFDM symbol in accordance with the relative index of the SRS symbol and the partial frequency bandwidth parameter. The start position parameter is used to determine a start position in an SRS frequency-domain resource bandwidth corresponding to each OFDM symbol. In other words, a position of each OFDM symbol determined in accordance with the start position parameter is taken as the start position in a frequency-domain resource during the transmission of the SRS resource.

In a possible embodiment of the present disclosure, for example, the partial frequency bandwidth parameter includes a partial frequency bandwidth transmission factor $P_F$ and a start position index factor $k_F$, $P_F$ is used to calculate a size of the partial frequency bandwidth for transmitting the SRS, $k_F \in \{0, ... , P_F - 1\}$, and $k_F$ is used to determine a start position index of the partial frequency bandwidth.

The relative index of the SRS symbol indicates a position of a symbol for the transmitted SRS in a unit transmission resource. For example, in the hopping transmission, the network device configures $N_{symb}^{hop}$ neighboring or non-neighboring SRS symbols in each hop for the UE, and the relative index of the SRS symbol indicates a position of an OFDM symbol for the transmitted SRS in each hop. For another example, in the non-hopping transmission, the SRS resource configured by the network device for the UE includes $N_{symb}^{SRS}$ neighboring or non-neighboring SRS symbols, and the relative index of the SRS symbol indicates a position of an OFDM symbol for the transmitted SRS.

In this regard, the start position parameter determined in accordance with the relative index of the SRS symbol and the partial frequency bandwidth parameter is associated with the relative index of the SRS symbol and the partial frequency bandwidth parameter. During the transmission of the SRS each time, the relative index of the SRS symbol is not constant, and the partial frequency bandwidth parameters may be different. When the start position parameter is configured in accordance with the relative index of the SRS symbol and the partial frequency bandwidth parameter, the SRSs are transmitted on an entire uplink bandwidth, so it is able to dynamically change the start position of the partial frequency bandwidth for the SRS transmission.

Step 102: determining a start position in an SRS frequency-domain resource bandwidth corresponding to each OFDM symbol in accordance with each start position parameter, and transmitting an SRS resource in accordance with the start position.

After obtaining the start position parameters, the start position in the SRS frequency-domain resource bandwidth corresponding to each OFDM symbol is determined in accordance with each start position parameter, and the SRS resource starts to be transmitted at the start position. In this way, the SRSs are transmitted on the entire bandwidth, so it is able for the network device to estimate the channel information on the entire uplink bandwidth in accordance with the SRS received on each partial sub-band, i.e., the SRSs on the entire bandwidth, thereby to improve the data transmission performance.

According to the embodiments of the present disclosure, the start position parameter of the partial frequency bandwidth corresponding to each OFDM symbol is determined in accordance with the relative index of the SRS symbol and the partial frequency bandwidth parameter configured by the network device. Then, the start position in the SRS frequency-domain resource bandwidth corresponding to each OFDM symbol is determined in accordance with each start position parameter, and the SRS resource is transmitted in accordance with the start position. Through dynamically changing the start position of the partial frequency bandwidth, the SRSs are transmitted on an entire uplink bandwidth. As a result, it is able for the network device to estimate channel information on the uplink bandwidth in accordance with the SRSs received on the entire bandwidth, thereby to improve the accuracy of the uplink channel estimation and the data transmission performance. In the embodiments of the present disclosure, it is able to solve the problem in the related art where no SRS is transmitted on the partial bandwidth in a transmission mode using the partial frequency bandwidth.

In a possible embodiment of the present disclosure, the relative index of the SRS symbol indicates a position of an OFDM symbol for an SRS transmitted in each hop in SRS hopping transmission, or a position of an OFDM symbol for an SRS transmitted in SRS non-hopping transmission. During the hopping transmission, the relative index of the SRS symbol indicates the position of the OFDM symbol for the transmission in each hop, and during the non-hopping transmission, the relative index of the SRS symbol indicates the position of the OFDM symbol for the transmitted SRS.

In a possible embodiment of the present disclosure, the partial frequency bandwidth parameter includes at least more than one of the quantity of repeated transmission symbols, a partial frequency bandwidth transmission factor, a start position index factor, or a resource bandwidth parameter.

The quantity R of repeated transmission symbols represents the quantity of retransmission. For the partial frequency bandwidth transmission factor $P_F$ and the start position index factor $k_F$, $P_F$ is used to calculate a size of the partial frequency bandwidth for transmitting the SRS, $k_F \in \{0, \ldots, P_F - 1\}$, and $k_F$ is used to determine a start position index of the partial frequency bandwidth. The resource bandwidth parameter $m_{SRS, BSRS}$ represents an SRS frequency-domain resource bandwidth corresponding to each OFDM symbol configured by a network side.

It should be appreciated that, the partial frequency bandwidth parameter includes at least more than one of the above-mentioned parameters (the quantity of repeated transmission symbols, the partial frequency bandwidth transmission factor, the start position index factor and the resource bandwidth parameter), e.g., at least two or three of them, or all of them, which will not be particularly defined herein.

In a possible embodiment of the present disclosure, the determining the start position parameter of the partial frequency bandwidth corresponding to each OFDM symbol in accordance with the relative index of the SRS symbol and the partial frequency bandwidth parameter configured by the network device includes: determining an index of an initial RB for the SRS resource in the SRS frequency-domain resource bandwidth corresponding to each OFDM symbol in accordance with the relative index of the SRS symbol and the partial frequency bandwidth parameter; and determining the start position parameter of the partial frequency bandwidth corresponding to each OFDM symbol in accordance with the index of the initial RB.

The index of the initial RB indicates a position of the initial RB. One RB consists of 12 subcarriers in a frequency domain, totally 180 kHz, i.e., each subcarrier spacing is 15 kHz. Usually, one RB consists of 14 OFDM symbols in a time domain, and one RB represents a slot of 0.5 ms. The UE determines the index of the initial RB in accordance with the relative index of the SRS symbol and the partial frequency bandwidth parameter, and determines the start position for transmitting the SRS resource in accordance with the index of the initial RB.

In a possible embodiment of the present disclosure, there is a target data relation among the relative index of the SRS symbol, the partial frequency bandwidth parameter and the index of the initial RB. The target data relation includes a first data relation or a second data relation.

In a possible embodiment of the present disclosure, the determining the index of the initial RB for the SRS resource in the SRS frequency-domain resource bandwidth corresponding to each OFDM symbol in accordance with the relative index of the SRS symbol and the partial frequency bandwidth parameter includes determining the index of the initial RB in accordance with the relative index of the SRS symbol, the partial frequency bandwidth parameter and the target data relation, and the target data relation includes the first data relation or the second data relation. The first data relation and the second data relation will be described hereinafter in conjunction with a first circumstance and a second circumstance.

In the first circumstance, the first data relation includes a formula (1) $N_{offset} = \frac{(k_F + l'_{offset}) \bmod P_F}{P_F} m_{SRS, B_{SRS}}$, where $N_{offset}$ represents the index of the initial RB, $l'_{offset}$ represents the relative index of the SRS symbol, mod represents a modulo operation, $m_{SRS, B_{SRS}}$ represents the SRS resource bandwidth parameter corresponding to one OFDM symbol, $P_F$ represents the partial frequency bandwidth transmission factor, $k_F$ represents the start position index factor, and $m_{SRS, B_{SRS}}$ represents the SRS resource bandwidth parameter. The index of the initial RB determined in accordance with the first data relation is associated with $m_{SRS, B_{SRS}}$, $k_F$, $P_F$, $R$ and the relative index of the SRS symbol in each hop. During the SRS transmission each time, the relative index of the SRS symbol is not constant, and $k_F$, $P_F$ and $R$ may be different. When the start position parameter is configured in accordance with the relative index of the SRS symbol and the partial frequency bandwidth parameter, $N_{offset}$ corresponding to different OFDM symbols are different, so the SRSs are transmitted on the entire uplink bandwidth, and the SRS transmission is performed through dynamically changing the start position of the partial frequency bandwidth. In a possible embodiment of the present disclosure, in the first data relation, $P_F = N_{\mathrm{symb}}^{\mathrm{hop}}$.

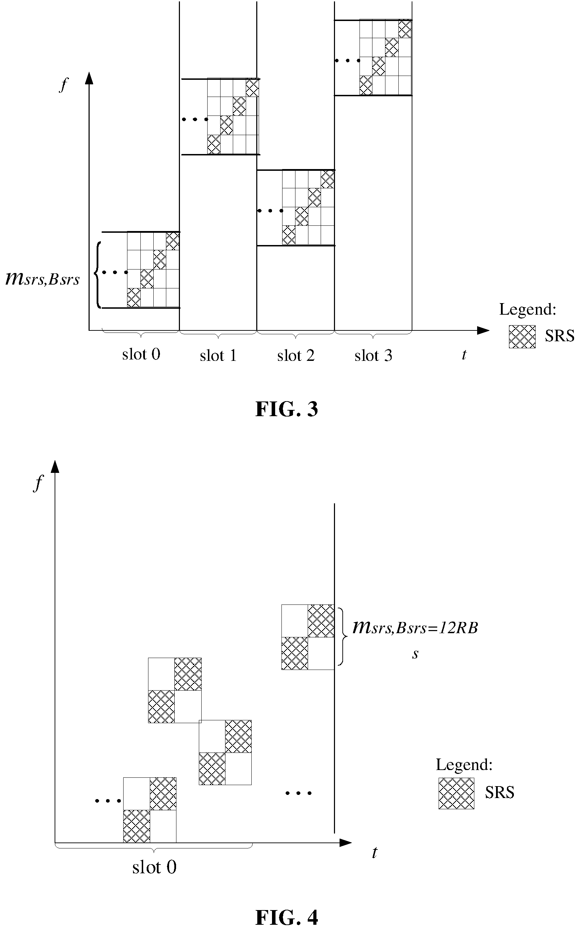

As a second instance, FIG. 3 illustratively shows an SRS transmission procedure by taking the hopping transmission as an example. In each hop, $N_{\mathrm{symb}}^{\mathrm{hop}}$ neighboring or non-neighboring SRS symbols are configured, the index of the initial RB for the partial frequency bandwidth in $m_{SRS, B_{SRS}}$ is associated with the relative index $l'_{\mathrm{offset}}$ of the SRS symbol in each hop, and as configured by the network device, $P_F = N_{\mathrm{symb}}^{\mathrm{hop}}$. The index of the initial RB for the partial frequency bandwidth in $m_{SRS, B_{SRS}}$ is determined in each hop on a $(l'_{\mathrm{offset}} \in \left\{ 0, \cdots, N_{\mathrm{symb}}^{\mathrm{hop}} - 1 \right\})^{\mathrm{th}}$ symbol in accordance with the first data relation.

As shown in FIG. 3, within a hopping period (slot0 to slot3), the SRS is transmitted on each partial frequency bandwidth (the partial frequency bandwidth corresponding to $m_{SRS, B_{SRS}}$), so the SRSs are transmitted on the entire uplink bandwidth. In this regard, it is able for the network device to, within one hopping period, estimate the uplink channel on the entire bandwidth in accordance with the SRSs transmitted for the partial bandwidth on different symbols.

To be specific, in a scenario for the second instance, as shown in FIG. 4, taking the transmission of the hopping, aperiodic SRS resource within a same slot as an example, the network device configures the aperiodic SRS resource including $N_{\mathrm{symb}}^{\mathrm{SRS}} = 8$ OFDM symbols for the UE, the quantity of repeated transmission symbols R is 2, $P_F$ and $k_F$ are 2 and 0 respectively, $m_{SRS, B_{SRS}}$ is determined in accordance with parameters $C_{SRS}$, $B_{SRS}$ and $b_{hop}$ configured by the network side, and $C_{SRS}$, $B_{SRS}$ and $b_{hop}$ are 13, 2 and 1 respectively. FIG. 4 shows a hopping mode.

In addition, $C_{SRS}$ is a parameter configured by the network side, and it is used to determine a size of the entire bandwidth for transmitting the SRS resource. In a possible embodiment of the present disclosure, $C_{SRS} \in \{0, 1, 2 \ldots \ldots, 63\}$.

$B_{SRS}$ is a configurable parameter at the network side, and it is used to determine the quantity of hops during the hopping transmission of the SRS resource. $B_{SRS} \in \{0, 1, 2 \ldots\ldots, 63\}$, and when this parameter is not configured by the network side, its value is 0.

$b_{\mathrm{hop}} \in \{0, 1, 2, 3\}$, and it is a configurable parameter at the network side and used to determine whether the hopping transmission is performed on the SRS. When this parameter is not configured, its value is 0.

After determining the values of $C_{SRS}$, $B_{SRS}$ and $b_{hop}$, the value of $m_{SRS, B_{SRS}}$ corresponding to them is inquired in accordance with a predetermined table.

As shown in FIG. 4, the UE determines, in accordance with R configured by the network side, that the quantity of symbols in each hop is $N_{\mathrm{symb}}^{\mathrm{hop}} = R = 2$, determines, in accordance with the parameters configured by the network side, that the size of the bandwidth in each hop is $m_{SRS, B_{SRS}} = 12$ RBs, and determines, in accordance with the configured parameters $P_F$ and $k_F$, that the bandwidth on the partial frequency for transmitting the SRS is

$$\frac{1}{P_F} m_{SRS,\ B_{SRS}} = 6\,\text{RBs}$$
.

When the network side indicates, through DCI signaling, the UE to enable a hopping function for the index of the initial RB, the UE calculates the index of the initial RB in accordance with the first data relation, and enables R to fall back to 1. $l'_{\text{offset}}$ represents the relative index of the SRS symbol for $N_{\text{symb}}^{\text{hop}}$ symbols in each hop, and it has a value of 0 or 1.

When $l'_{\text{offset}} = 0$, $N_{offset}$ = 0, and when $l'_{\text{offset}} = 1$, $N_{offset}$ = 6. The UE calculates a frequency-domain start position for the SRS transmitted on each symbol in accordance with $N_{offset}$ and the following formula (3). For example, under this configuration, the indices of the initial RBs have values of 0 and 6 in a transmission sub-band $m_{SRS, BSRS}$=12.

In another scenario of the second instance, taking the transmission of the hopping, aperiodic SRS (A-SRS) within different slots (slot0 to slot4) as an example, the network side configures the A-SRS resource including $N_{\text{symb}}^{\text{SRS}} = 4$ OFDM symbols for the UE, the quantity $R$ of repeated transmission symbols is 4, $P_F$ and $k_F$ are 4 and 0 respectively, and the parameters $C_{SRS}$, $B_{SRS}$ and *b-hop* are 13, 2 and 1 respectively. A hopping mode is shown in FIG. 3, so as to implement the hopping transmission between the slots.

In addition, the UE determines, in accordance with R configured by the network side, that the quantity of symbols in each hop is $N_{\text{symb}}^{\text{hop}} = R = 4$, determines, in accordance with the parameters configured by the network side, that the size of the bandwidth in each hop is $m_{SRS, BSRS}$ = 12 RBs, and determines, in accordance with the configured parameters $P_F$ and $k_F$, that the bandwidth on the partial frequency for transmitting the SRS is $\frac{1}{P_F} m_{SRS,\ B_{SRS}} = 3$ RBs. When the network side indicates, through DCI signaling, the UE to enable a hopping function for the index of the initial RB, the UE calculates the index of the initial RB through the formula (1), and enables R to fall back to 1. $l'_{\text{offset}} = 0,\ 1,\ 2,\ 3$ represents the relative indices of the $N_{\text{symb}}^{\text{hop}}$ symbols in each hop, so the indices $N_{offset}$ of the initial RBs corresponding to the symbols are 0, 3, 6 and 9 respectively. The UE calculates the frequency-domain start position for the SRS transmitted on each symbol in accordance with $N_{offset}$ and the following formula (3). For example, the indices of the initial RBs have values 0, 3, 6 and 9 in the transmission sub-band $m_{SRS, BSRS}$=12.

In this regard, during the hopping transmission, through dynamically changing the start position of the partial frequency bandwidth, the SRSs are transmitted on the entire uplink bandwidth. The network device estimates the channel information about the uplink bandwidth in accordance with the SRSs received on the entire bandwidth, so it is able to improve the uplink channel estimation accuracy as well as the data transmission performance.

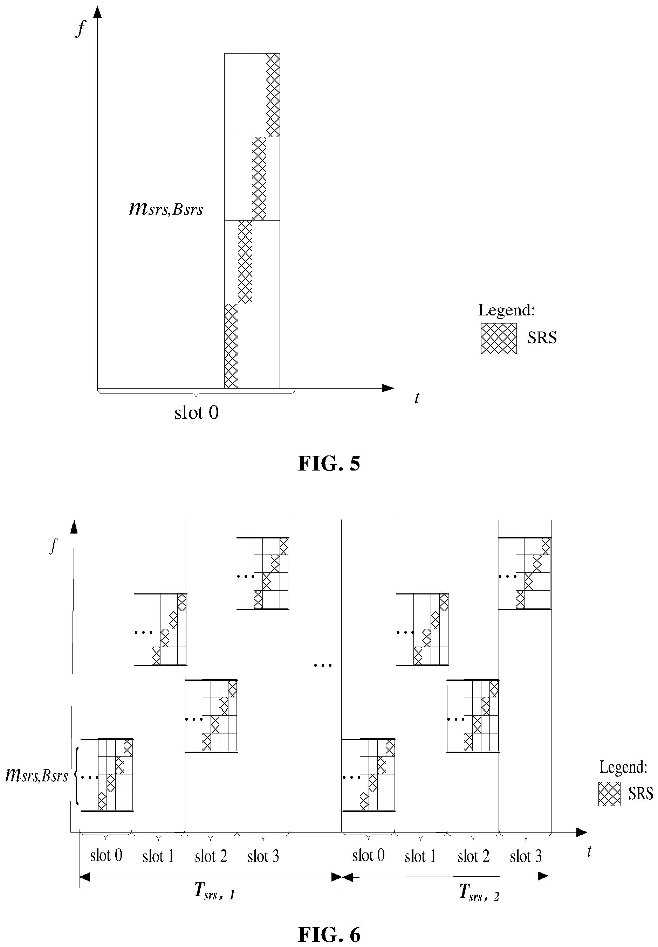

As a third instance, as shown in FIG. 5, taking the transmission of the non-hopping A-SRS resource as an example, the network side configures the A-SRS resource including $N_{\text{symb}}^{\text{SRS}} = 4$ OFDM symbols for the UE, the repetition factor R is 1, i.e., no repetition is performed, $P_F$ and $k_F$ are 4 and 0 respectively, and the parameters $C_{SRS}$, $B_{SRS}$ and *b-hop* are 13, 0 and 0 respectively.

The UE determines, in accordance with the parameters configured by the network side, that the size of the bandwidth in each hop is $m_{SRS, BSRS}$ = 48 RBs, determines, in accordance with the configured parameters $P_F$ and $k_F$, that the bandwidth on the partial frequency for transmitting the SRS is $\frac{1}{P_F} m_{SRS,\ B_{SRS}} = 12$ RBs, and determines the index of the initial RB through the formula (1). $l'_{\text{offset}} = 0,\ 1,\ 2,\ 3$ represents the relative indices of the symbols in one SRS resource, so the indices $N_{offset}$ of the initial RBs corresponding to the symbols are 0, 12, 24 and 36 respectively. As shown in FIG. 5, the indices of the initial RBs have values 0, 12, 24 and 36 in the transmission sub-band $m_{SRS, BSRS}$=12.

In the second circumstance, the second data relation includes a formula (2)

$$N_{offset} = \frac{\left(\left(k_F + \left\lfloor\frac{l'_{offset}}{R}\right\rfloor + \left\lfloor\frac{N^{hop}_{symb}}{R}\right\rfloor * (i \bmod N_{max})\right) \bmod P_F\right)}{P_F} m_{SRS,\ B_{SRS}}$$ , where i represents an $i^{th}$ transmission period for the SRS resource, $N_{max}$ represents the maximum quantity of transmission periods, $N_{max} = \left\lceil\frac{P_F R}{N^{hop}_{symb}}\right\rceil$, $\lceil x \rceil$

represents a round-up operation on x, i.e., $\left\lceil\frac{P_F R}{N^{hop}_{symb}}\right\rceil$ represents the round-up operation on $\frac{P_F R}{N^{hop}_{symb}}$, $\lfloor x \rfloor$ represents a

round-down operation on x, i.e., $\lfloor l'_{offset}\rfloor$ represents the round-down operation on $l'_{offset}$, and $\left\lfloor\frac{N^{hop}_{symb}}{R}\right\rfloor$ represents

the round-down operation on $\frac{N^{hop}_{symb}}{R}$, $N^{hop}_{symb}$ represents the quantity of OFDM symbols in each hop in each hopping transmission or the quantity of OFDM symbols included in each SRS resource in the non-hopping transmission, and R represents the quantity of repeated transmission symbols. When the index of the initial RB is determined in accordance with the second data relation, $N_{offset}$ corresponding to different OFDM symbols is not constant, so the SRSs are transmitted on the entire uplink bandwidth, and the SRS transmission is performed through dynamically changing the start position of the partial frequency bandwidth.

In a possible embodiment of the present disclosure, in an application scenario of the second data relation, the network side may configure or indicate a new R (marked as R', and R'<R) through one or more of RRC signaling, MAC-CE signaling and DCI signaling. When the UE calculates the index of the initial RB in accordance with the second data relation, it is necessary to fall R back to R' newly indicated by the network side.

As a fourth instance, FIG. 6 illustratively shows a procedure of the SRS transmission in a hopping period by taking the hopping transmission as an example. The index of the initial RB for the partial frequency bandwidth in

$m_{SRS,\ B_{SRS}}$ is determined in each hop on a $(l'_{offset} \in \{0,\ \cdots,\ N^{hop}_{symb} - 1\})^{th}$ symbol in accordance with the formula (2). In addition, when the SRS is still not transmitted on a partial bandwidth of the entire bandwidth in a hopping period $T_{SRS,1}$, in order to ensure that the SRSs are transmitted on the entire bandwidth, as shown in FIG. 6, the index of the initial RB is changed to $N_{offset} = \frac{\left(k_F + \left\lfloor\frac{l'_{offset}}{R}\right\rfloor + 2\right) \bmod P_F}{P_F} m_{SRS,\ B_{SRS}}$ in a next hopping period $T_{SRS,2}$.

Alternatively, a value of the quantity $N^{hop}_{symb}$ of SRS symbols in one hop is configured as $P_F R$, so that the SRSs are transmitted on the entire bandwidth within one hopping period. During the hopping transmission between slots, the SRSs are transmitted on a same OFDM symbol or different OFDM symbols within each slot, and the SRS transmission bandwidths on different symbols have a same size, i.e., $\frac{1}{P_F} m_{SRS,\ B_{SRS}}$. Alternatively, the SRS transmission bandwidth on a part of symbols in each hop is $\frac{1}{P_{F1}} m_{SRS,\ B_{SRS}}$, and the SRS transmission bandwidth on the other part of symbols is $\frac{1}{P_{F2}} m_{SRS,\ B_{SRS}}$, where $P_{F1}$ and $P_{F2}$ are different partial frequency transmission actors configured by the network side.

In a scenario of the third instance, taking a hopping Periodic SRS (P-SRS) or a Semi-Persistent SRS (SP-SRS) as an example, the network side configures a periodic SRS resource including $N^{SRS}_{symb} = 4$ OFDM symbols for the UE, the repetition factor R is 2, $P_F$ and $k_F$ are 4 and 0 respectively, the parameters $C_{SRS}$, $B_{SRS}$ and b-hop are 13, 2 and 1 respectively, and the period $T_{SRS}$ of the SRS resource and a slot offset $T_{offset}$ are 10ms and 0ms respectively. A hopping mode is shown in FIG. 6, so as to implement the hopping transmission between the slots.

The UE determines that a bandwidth size in each hop is $m_{SRS,\ B_{SRS}}$ = 12 RBs in accordance with the parameters configured by the network side, and determines that the bandwidth size for the transmission of the SRS on the partial frequency is $\frac{1}{P_F} m_{SRS,\ B_{SRS}} = 3$ RBs in accordance with the configured parameters $P_F$ and $k_F$. The maximum quantity of desired hopping periods is $N_{max} = \left\lceil \frac{P_F R}{N_{symb}^{hop}} \right\rceil = 2$, and the index of the initial RB in the i$^{th}$ SRS transmission period is determined through the formula (2), where $l'_{offset}$=0, 1, 2, 3.

When i mod $N_{max}$ = 0, values of $N_{offset}$ for the symbols in each hop are 0, 0, 3 and 3 respectively. When i mod $N_{max}$ = 1, values of $N_{offset}$ for the symbols in each hop are 6, 6, 9 and 9 respectively.

Then, the UE calculates the frequency-domain start position for the transmission of the SRS on each symbol in accordance with $N_{offset}$. For example, when i mod $N_{max}$ = 0, the indices of the initial RBs in the transmission sub-band $m_{SRS, B_{SRS}}$=12 are 0, 0, 3 and 3, and when i mod $N_{max}$ = 1, the indices of the initial RBs in the transmission sub-band $m_{SRS, B_{SRS}}$=12 are 6, 6, 9 and 9.

In a possible embodiment of the present disclosure, the start position parameter of the partial frequency bandwidth corresponding to each OFDM symbol is determined in accordance with the index of the initial RB, the start position parameter is determined in accordance with a third data relation expressed as a formula (3)

$$k_0^{(p_i)} = \bar{k}_0^{(p_i)} + \sum_{b=0}^{B_{SRS}} K_{TC} M_{sc,\ b}^{SRS} n_b$$

, and the start position of the SRS on the entire frequency-domain resource is determined, where $k_0^{(p_i)}$ represents the start position parameter, i.e., a start position in a frequency domain, and

$$\bar{k}_0^{(p_i)} = \left(n_{shift} + N_{offset}\right)N_{sc}^{RB} + \left(k_{TC}^{(p_i)} + k_{offset}^{l'}\right) \bmod K_{TC}$$

.

$$k_{TC}^{(p_i)} = \begin{cases} \left(\bar{k}_{TC} + K_{TC}/2\right) \bmod K_{TC} & \text{first predetermiend condition} \\ \bar{k}_{TC} & \text{otherwise} \end{cases}$$

, where the first predetermined condition includes $n_{SRS}^{cs} \in \left\{ n_{SRS}^{cs,\ max}/2,\ \ ...,\ \ n_{SRS}^{cs,\ max} - 1 \right\}$ and $N_{ap}^{SRS}$ = 4 and $p_i \in$ {1001, 1003}, and "otherwise" represents a condition other than the first predetermined condition.

$p_i \in$ {1000, 1001, 1002, 1003} represents indexes of ports, $K_{TC}$ represents a subcarrier spacing of the SRS, and $n_{shift}$ is a predetermined parameter value configured by the network side for determining an offset of the SRS resource transmission relative to a reference grid point in the frequency domain. $M_{sc,\ b}^{SRS} = m_{SRS,\ B_{SRS}} N_{sc}^{RB}/K_{TC}$ , and $m_{SRS, B_{SRS}}$ represents the SRS frequency-domain resource bandwidth configured by the network side on each OFDM symbol. $N_{sc}^{RB}$ represents the quantity of subcarriers in each RB, and $K_{TC}$ represents a comb value of the SRS configured by the network side.

Further, when the SRS is configured as an SRS resource for positioning, the value of $k_{offset}^{l'}$ is determined through Table 1, otherwise $k_{offset}^{l'} = 0$. As shown in Table 1, $k_{offset}^{l'}$ is a function of $K_{TC}$ and l', where $l' \in \left\{0,\ 1,\ ...,\ N_{symb}^{SRS} - 1\right\}$, and $N_{symb}^{SRS}$ represents the quantity of OFDM symbols for the transmitting the SRS in the SRS resource.

Table 1

| $K_{TC}$ | $k_{offset}^0, \quad ..., \quad k_{offset}^{N_{symb}^{SRS}-1}$ | | | | |
|---|---|---|---|---|---|
| | $N_{symb}^{SRS} = 1$ | $N_{symb}^{SRS} = 2$ | $N_{symb}^{SRS} = 4$ | $N_{symb}^{SRS} = 8$ | $N_{symb}^{SRS} = 12$ |
| 2 | 0 | 0, 1 | 0, 1, 0, 1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

$\overline{k}_{TC} \in \{0, 1, ..., K_{TC} - 1\}$, and it is a parameter configured by the network side. $n_{SRS}^{cs,\ max}$ represents the maximum quantity of cyclic shifts determined through Table 2, and $n_{SRS}^{cs,\ max}$ is a function of $K_{TC}$.

Table 2

| $K_{TC}$ | $n_{SRS}^{cs,\ max}$ |
|---|---|
| 2 | 8 |
| 4 | 12 |
| 8 | 6 |

$n_{SRS}^{cs}$ is a value configured by the network side, and it is used to determine the generation of an SRS sequence. $N_{ap}^{SRS}$ represents the quantity of SRS antenna ports in one SRS resource.

In a possible embodiment of the present disclosure, the determining the index of the initial RB in accordance with the relative index of the SRS symbol, the partial frequency bandwidth parameter and the target data relation includes receiving target indication information, and determining the index of the initial RB in accordance with the relative index of the SRS symbol, the partial frequency bandwidth parameter and the target data relation. The target indication information is used to perform at least one of: indicating the UE to set the quantity of repeated transmission symbols as a first predetermined value, e.g., 1 or 2; indicating the UE that a hopping function for the index of the initial RB is enabled (when the SRS hopping function is enabled, one SRS resource occupies consecutive OFDM symbols within one slot but occupies different sub-bands in the frequency domain); or indicating a value of the partial frequency bandwidth transmission factor.

Upon the receipt of the tart indication information, the UE determines the index of the initial RB, and the target indication information is transmitted by the network side. In a possible embodiment of the present disclosure, the target indication information is carried in one or more of RRC signaling, MAC-CE signaling or DCI signaling.

According to the embodiments of the present disclosure, the start position parameter of the partial frequency bandwidth corresponding to each OFDM symbol is determined in accordance with the relative index of the SRS symbol and the partial frequency bandwidth parameter configured by the network device. Then, the start position in the SRS frequency-domain resource bandwidth corresponding to each OFDM symbol is determined in accordance with each start position parameter, and the SRS resource is transmitted in accordance with the start position. Through dynamically changing the start position of the partial frequency bandwidth, the SRSs are transmitted on an entire uplink bandwidth. As a result, it is able for the network device to estimate channel information on the uplink bandwidth in accordance with the SRSs received on the entire bandwidth, thereby to improve the accuracy of the uplink channel estimation and the data transmission performance.

The present disclosure further provides in some embodiments a signal transmission method executed by any electronic device, e.g., a network device. For ease of description, the method will be described hereinafter when it is executed by the network device.

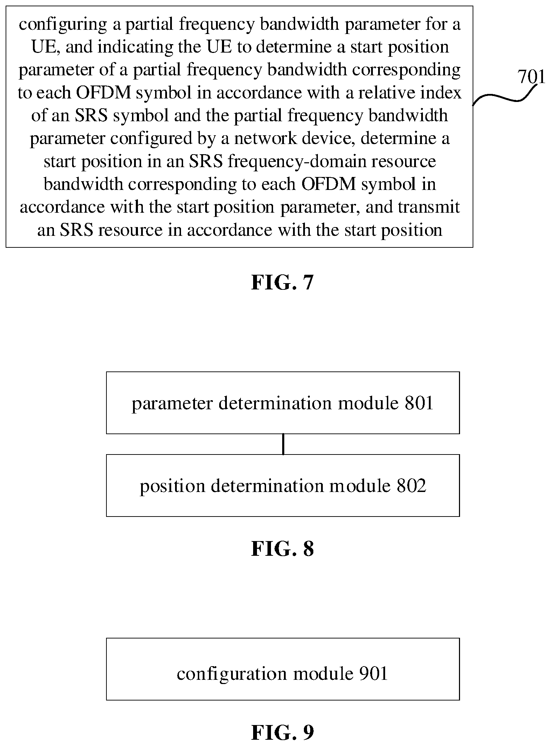

As shown in FIG. 7, the signal transmission method includes Step 701 of configuring a partial frequency bandwidth parameter for a UE, and indicating the UE to determine a start position parameter of a partial frequency bandwidth corresponding to each OFDM symbol in accordance with a relative index of an SRS symbol and the partial frequency bandwidth parameter configured by a network device, determine a start position in an SRS frequency-domain resource bandwidth corresponding to each OFDM symbol in accordance with the start position parameter, and transmit an SRS resource in accordance with the start position.

One SRS resource is transmitted on N ymb consecutive OFDM symbols, where $N_{\text{symb}}^{\text{SRS}}$ is 1, 2, 3 or any other value. As a first instance, as shown in FIG. 2, each rectangle represents an OFDM symbols, an SRS resourcel occupies one OFDM symbol, an SRS resource2 occupies four OFDM symbols, and an SRS resource3 occupies two OFDM symbols. Through the transmission of one SRS resource on a plurality of OFDM symbols, it is able to increase the coverage of an SRS, and achieve the hopping within one slot (i.e., intra-slot hopping) as well as the hopping between slots (i.e., inter-slot hopping).

The network device (i.e., a network side) configures the partial frequency bandwidth parameter for the UE, and indicates the UE to determine the start position parameter of the partial frequency bandwidth corresponding to each OFDM symbol in accordance with the relative index of the SRS symbol and the partial frequency bandwidth parameter. The start position parameter is used to determine a start position in an SRS frequency-domain resource bandwidth corresponding to each OFDM symbol. In other words, a position of each OFDM symbol determined in accordance with the start position parameter is taken as the start position in a frequency-domain resource during the transmission of the SRS resource.

In a possible embodiment of the present disclosure, for example, the partial frequency bandwidth parameter includes a partial frequency bandwidth transmission factor $P_F$ and a start position index factor $k_F$, $P_F$ is used to calculate a size of the partial frequency bandwidth for transmitting the SRS, $k_F \in \{0, \ldots, P_F - 1\}$, and $k_F$ is used to determine a start position index of the partial frequency bandwidth.

The relative index of the SRS symbol indicates a position of a symbol for the transmitted SRS in a unit transmission resource. For example, in the hopping transmission, the network device configures $N_{\text{symb}}^{\text{hop}}$ neighboring or non-neighboring SRS symbols in each hop for the UE, and the relative index of the SRS symbol indicates a position of an OFDM symbol for the transmitted SRS in each hop. For another example, in the non-hopping transmission, the SRS resource configured by the network device for the UE includes $N_{\text{symb}}^{\text{SRS}}$ neighboring or non-neighboring SRS symbols, and the relative index of the SRS symbol indicates a position of an OFDM symbol for the transmitted SRS.

In this regard, the start position parameter determined in accordance with the relative index of the SRS symbol and the partial frequency bandwidth parameter is associated with the relative index of the SRS symbol and the partial frequency bandwidth parameter. During the transmission of the SRS each time, the relative index of the SRS symbol is not constant, and the partial frequency bandwidth parameters may be different. When the start position parameter is configured in accordance with the relative index of the SRS symbol and the partial frequency bandwidth parameter, the SRSs are transmitted on an entire uplink bandwidth, so it is able to dynamically change the start position of the partial frequency bandwidth for the SRS transmission.

The network device further indicates the UE to determine the start position in the SRS frequency-domain resource bandwidth corresponding to each OFDM symbol in accordance with the start position parameter, and transmit the SRS resource in accordance with the start position. After obtaining the start position parameters, the UE determines the start position in the SRS frequency-domain resource bandwidth corresponding to each OFDM symbol in accordance with each start position parameter, and starts to transmit the SRS resource at the start position. In this way, the SRSs are transmitted on the entire bandwidth, so it is able for the network device to estimate the channel information on the entire uplink bandwidth in accordance with the SRS received on each partial sub-band, i.e., the SRSs on the entire bandwidth, thereby to improve the data transmission performance.

In a possible embodiment of the present disclosure, the indicating the UE to determine the start position parameter of the partial frequency bandwidth corresponding to each OFDM symbol in accordance with the relative index of the SRS symbol and the partial frequency bandwidth parameter configured by the network device includes transmitting target indication information to the UE, the target indication information is used to indicate the UE to determine the start position parameter of the partial frequency bandwidth corresponding to each OFDM symbol in accordance with the relative index of the SRS symbol and the partial frequency bandwidth parameter configured by the network device. The target indication information is used to perform at least one of: indicating the UE to set the quantity of repeated transmission symbols as a first predetermined value, e.g., 1 or 2; indicating the UE that a hopping function for the index of the initial RB is enabled (when the SRS hopping function is enabled, one SRS resource occupies consecutive OFDM symbols within one slot but occupies different sub-bands in the frequency domain); or indicating a value of the partial frequency bandwidth transmission factor.

In a possible embodiment of the present disclosure, the target indication information is carried in at least one of RRC signaling, MAC-CE signaling or DCI signaling.

In a possible embodiment of the present disclosure, subsequent to configuring the partial frequency bandwidth parameter for the UE, the signal transmission method further includes receiving the SRS resource at the start position in the SRS frequency-domain resource bandwidth corresponding to each OFDM symbol.

The UE transmits the SRSs on the entire bandwidth, and the network device estimates the channel information on the entire uplink bandwidth in accordance with the SRS received on each partial sub-band, i.e., the SRSs on the entire bandwidth, so as to improve the data transmission performance.

According to the embodiments of the present disclosure, the network device configures the partial frequency bandwidth for the UE, and indicates the UE to determine the start position parameter of the partial frequency bandwidth corresponding to each OFDM symbol in accordance with the relative index of the SRS symbol and the partial frequency bandwidth parameter configured by the network device, determine the start position in the SRS frequency-domain resource bandwidth corresponding to each OFDM symbol in accordance with the start position parameter, and transmit the SRS resource in accordance with the start position. Through configuring the partial frequency bandwidth parameter for the UE and dynamically changing the start position of the partial frequency bandwidth, the SRSs are transmitted on an entire uplink bandwidth. As a result, it is able to estimate channel information on the uplink bandwidth in accordance with the SRSs received on the entire bandwidth, thereby to improve the accuracy of the uplink channel estimation and the data transmission performance. In the embodiments of the present disclosure, it is able to solve the problem in the related art where no SRS is transmitted on the partial bandwidth in a transmission mode using the partial frequency bandwidth.

Based on a same principle as that of the above-mentioned method, the present disclosure further provides in some embodiments a signal transmission device which, as shown in FIG. 8, includes: a parameter determination module 801 configured to determine a start position parameter of a partial frequency bandwidth corresponding to each OFDM symbol in accordance with a relative index of an SRS symbol and a partial frequency bandwidth parameter configured by a network device; and a position determination module 802 configured to determine a start position in an SRS frequency-domain resource bandwidth corresponding to each OFDM symbol in accordance with each start position parameter, and transmit an SRS resource in accordance with the start position.

One SRS resource is transmitted on $N_{\text{symb}}^{\text{SRS}}$ consecutive OFDM symbols, where $N_{\text{symb}}^{\text{SRS}}$ is 1, 2, 4 or any other value. As a first instance, as shown in FIG. 2, each rectangle represents an OFDM symbols, an SRS resourcel occupies one OFDM symbol, an SRS resource2 occupies four OFDM symbols, and an SRS resources occupies two OFDM symbols. Through the transmission of one SRS resource on a plurality of OFDM symbols, it is able to increase the coverage of an SRS, and achieve the hopping within one slot (i.e., intra-slot hopping) as well as the hopping between slots (i.e., inter-slot hopping).

The network device (i.e., a network side) configures the partial frequency bandwidth parameter for the UE, and the UE determines the start position parameter of the partial frequency bandwidth corresponding to each OFDM symbol in accordance with the relative index of the SRS symbol and the partial frequency bandwidth parameter. The start position parameter is used to determine a start position in an SRS frequency-domain resource bandwidth corresponding to each OFDM symbol. In other words, a position of each OFDM symbol determined in accordance with the start position parameter is taken as the start position in a frequency-domain resource during the transmission of the SRS resource.

In a possible embodiment of the present disclosure, for example, the partial frequency bandwidth parameter includes a partial frequency bandwidth transmission factor $P_F$ and a start position index factor $k_F$, $P_F$ is used to calculate a size of the partial frequency bandwidth for transmitting the SRS, $k_F \in \{0, ..., P_F - 1\}$, and $k_F$ is used to determine a start position index of the partial frequency bandwidth.

The relative index of the SRS symbol indicates a position of a symbol for the transmitted SRS in a unit transmission resource. For example, in the hopping transmission, the network device configures $N_{\text{symb}}^{\text{hop}}$ neighboring or non-neighboring SRS symbols in each hop for the UE, and the relative index of the SRS symbol indicates a position of an OFDM symbol for the transmitted SRS in each hop. For another example, in the non-hopping transmission, the SRS resource configured by the network device for the UE includes $N_{\text{symb}}^{\text{SRS}}$ neighboring or non-neighboring SRS symbols, and the relative index of the SRS symbol indicates a position of an OFDM symbol for the transmitted SRS.

In this regard, the start position parameter determined in accordance with the relative index of the SRS symbol and the partial frequency bandwidth parameter is associated with the relative index of the SRS symbol and the partial frequency bandwidth parameter. During the transmission of the SRS each time, the relative index of the SRS symbol is not constant, and the partial frequency bandwidth parameters may be different. When the start position parameter is determined in accordance with the relative index of the SRS symbol and the partial frequency bandwidth parameter, the SRS is transmitted on an entire uplink bandwidth, so it is able to dynamically change the start position of the partial frequency bandwidth for the SRS transmission.

The position determination module 802 is configured to determine the start position of each OFDM symbol within the corresponding SRS frequency domain bandwidth, and transmit the SRS resource(s) in accordance with the start position determined.

After obtaining the start position parameters, the start position in the SRS frequency-domain resource bandwidth corresponding to each OFDM symbol is determined in accordance with each start position parameter, and the SRS resource starts to be transmitted at the start position. In this way, the SRS is transmitted on the entire bandwidth, so it is able for the network device to estimate the channel information on the entire uplink bandwidth in accordance with the SRS received on each partial sub-band, i.e., the SRSs on the entire bandwidth, thereby to improve the data transmission performance.

In a possible embodiment of the present disclosure, the relative index of the SRS symbol indicates a position of an OFDM symbol for an SRS transmitted in each hop in SRS hopping transmission, or a position of an OFDM symbol for an SRS transmitted in SRS non-hopping transmission.

In a possible embodiment of the present disclosure, the partial frequency bandwidth parameter includes at least more than one of the quantity of repeated transmission symbols, a partial frequency bandwidth transmission factor, a start position index factor, or a resource bandwidth parameter.

In a possible embodiment of the present disclosure, the parameter determination module 801 includes: a first determination sub-module configured to determine an index of an initial RB for the SRS resource in the SRS frequency-domain resource bandwidth corresponding to each OFDM symbol in accordance with the relative index of the SRS symbol and the partial frequency bandwidth parameter; and a second determination sub-module configured to determine the start position parameter of the partial frequency bandwidth corresponding to each OFDM symbol in accordance with the index of the initial RB.

In a possible embodiment of the present disclosure, the first determination sub-module is configured to determine the index of the initial RB in accordance with the relative index of the SRS symbol, the partial frequency bandwidth parameter and a target data relation, the target data relation includes a first data relation or a second data relation, the first data relation includes

$$N_{offset} = \frac{\left(k_F + l'_{offset}\right) \bmod P_F}{P_F} m_{SRS, \ B_{SRS}}$$

, where $N_{offset}$ represents the index of the initial RB, $l'_{offset}$ represents the relative index of the SRS symbol, mod represents a modulo operation, $m_{SRS, B_{SRS}}$ represents the resource bandwidth parameter, $P_F$ represents the partial frequency bandwidth transmission factor and $k_F$ represents the start position index factor, and the second data relation includes

$$N_{offset} = \frac{\left(k_F + \left\lceil \frac{l'_{offset}}{R} \right\rceil + \left\lfloor \frac{N_{symb}^{hop}}{R} \right\rfloor * (i \bmod N_{max})\right) \bmod P_F}{P_F} m_{SRS, \ B_{SRS}}$$

, where i represents an ith transmission period for the SRS resource, $N_{max}$ represents the maximum quantity of transmission periods, $N_{max} = \left\lceil \frac{P_F R}{N_{symb}^{hop}} \right\rceil$, $\lceil x \rceil$ represents a round-up operation on x, $\lfloor x \rfloor$ represents a round-down operation on x, $N_{symb}^{hop}$ represents the quantity of OFDM symbols in each hop in each hopping transmission or the quantity of OFDM symbols included in each SRS resource in the non-hopping transmission, and R represents the quantity of repeated transmission symbols.

In a possible embodiment of the present disclosure, the parameter determination module 801 includes: a reception sub-module configured to receive target indication information; and a response sub-module configured to determine the start position parameter of the partial frequency bandwidth corresponding to each OFDM symbol in response to the target indication information in accordance with the relative index of the SRS symbol and the partial frequency bandwidth parameter configured by the network device. The target indication information is used to perform at least one of: indicating a UE to set the quantity of repeated transmission symbols as a first predetermined value; indicating the UE that a hopping function for the index of the initial RB is enabled; or indicating a value of the partial frequency bandwidth transmission factor.

The signal transmission device in the embodiments of the present disclosure is capable of implementing the procedures implemented by the UE in the method embodiments in FIGS. 1 to 7, which will not be particularly defined herein.

According to the signal transmission device in the embodiments of the present disclosure, the parameter determination module 801 is configured to determine the start position parameter of the partial frequency bandwidth corresponding to each OFDM symbol in accordance with the relative index of the SRS symbol and the partial frequency bandwidth parameter configured by the network device, and the position determination module 802 is configured to determine the start position in the SRS frequency-domain resource bandwidth corresponding to each OFDM symbol in accordance with each start position parameter, and transmit the SRS resource in accordance with the start position. Through dynamically changing the start position of the OFDM symbol in the partial frequency bandwidth, the SRSs are transmitted on the entire uplink bandwidth. As a result, it is able for the network device to estimate channel information on the uplink bandwidth in accordance with the SRSs received on the entire bandwidth, thereby to improve the accuracy of the uplink channel estimation and the data transmission performance.

The present disclosure further provides in some embodiments a signal transmission device which, as shown in FIG. 9, includes a configuration module 901 configured to configure a partial frequency bandwidth parameter for a UE, and indicate the UE to determine a start position parameter of a partial frequency bandwidth corresponding to each OFDM symbol in accordance with a relative index of an SRS symbol and the partial frequency bandwidth parameter configured by a network device, determine a start position in an SRS frequency-domain resource bandwidth corresponding to each OFDM symbol in accordance with the start position parameter, and transmit an SRS resource in accordance with the start position.

One SRS resource is transmitted on $N_{\text{symb}}^{\text{SRS}}$ consecutive OFDM symbols, where $N_{\text{symb}}^{\text{SRS}}$ is 1, 2, 4 or any other value. As a first instance, as shown in FIG. 2, each rectangle represents an OFDM symbols, an SRS resource1 occupies one OFDM symbol, an SRS resource2 occupies four OFDM symbols, and an SRS resources occupies two OFDM symbols. Through the transmission of one SRS resource on a plurality of OFDM symbols, it is able to increase the coverage of an SRS, and achieve the hopping within one slot (i.e., intra-slot hopping) as well as the hopping between slots (i.e., inter-slot hopping).

The configuration module 901 is configured to configure the partial frequency bandwidth parameter for the UE, and indicate the UE to determine the start position parameter of the partial frequency bandwidth corresponding to each OFDM symbol in accordance with the relative index of the SRS symbol and the partial frequency bandwidth parameter. The start position parameter is used to determine a start position in an SRS frequency-domain resource bandwidth corresponding to each OFDM symbol. In other words, a position of each OFDM symbol determined in accordance with the start position parameter is taken as the start position in a frequency-domain resource during the transmission of the SRS resource.

In a possible embodiment of the present disclosure, for example, the partial frequency bandwidth parameter includes a partial frequency bandwidth transmission factor $P_F$ and a start position index factor $k_F$, $P_F$ is used to calculate a size of the partial frequency bandwidth for transmitting the SRS, $k_F \in \{0, \dots, P_F - 1\}$, and $k_F$ is used to determine a start position index of the partial frequency bandwidth.

The relative index of the SRS symbol indicates a position of a symbol for the transmitted SRS in a unit transmission resource. For example, in the hopping transmission, the network device configures $N_{\text{symb}}^{\text{hop}}$ neighboring or non-neighboring SRS symbols in each hop for the UE, and the relative index of the SRS symbol indicates a position of an OFDM symbol for the transmitted SRS in each hop. For another example, in the non-hopping transmission, the SRS resource configured by the network device for the UE includes $N_{\text{symb}}^{\text{SRS}}$ neighboring or non-neighboring SRS symbols, and the relative index of the SRS symbol indicates a position of an OFDM symbol for the transmitted SRS.

In this regard, the start position parameter determined in accordance with the relative index of the SRS symbol and the partial frequency bandwidth parameter is associated with the relative index of the SRS symbol and the partial frequency bandwidth parameter. During the transmission of the SRS each time, the relative index of the SRS symbol is not constant, and the partial frequency bandwidth parameters may be different. When the start position parameter is configured in accordance with the relative index of the SRS symbol and the partial frequency bandwidth parameter, the SRSs are transmitted on an entire uplink bandwidth, so it is able to dynamically change the start position of the partial frequency bandwidth for the SRS transmission.

The network device further indicates the UE to determine the start position in the SRS frequency-domain resource bandwidth corresponding to each OFDM symbol in accordance with the start position parameter, and transmit the SRS resource in accordance with the start position. After obtaining the start position parameters, the UE determines the start position in the SRS frequency-domain resource bandwidth corresponding to each OFDM symbol in accordance with each start position parameter, and starts to transmit the SRS resource at the start position. In this way, the SRSs are transmitted on the entire bandwidth, so it is able for the network device to estimate the channel information on the entire uplink bandwidth in accordance with the SRS received on each partial sub-band, i.e., the SRSs on the entire bandwidth, thereby to improve the data transmission performance.

In a possible embodiment of the present disclosure, the configuration module includes an indication sub-module configured to transmit target indication information to the UE, the target indication information is used to indicate the UE to determine the start position parameter of the partial frequency bandwidth corresponding to each OFDM symbol in accordance with the relative index of the SRS symbol and the partial frequency bandwidth parameter configured by the network device, and the target indication information is used to perform at least one of: indicating the UE to set the quantity of repeated transmission symbols as a first predetermined value; indicating the UE that a hopping function for the index of the initial RB is enabled; or indicating a value of the partial frequency bandwidth transmission factor.

In a possible embodiment of the present disclosure, the target indication information is carried in at least one of RRC signaling, MAC-CE signaling or DCI signaling.

In a possible embodiment of the present disclosure, the signal transmission device includes an SRS reception module configured to receive the SRS resource at the start position in the SRS frequency-domain resource bandwidth corresponding to each OFDM symbol.

The signal transmission device in the embodiments of the present disclosure is capable of implementing the procedures implemented by the network device in the above-mentioned method embodiments in FIGS. 1 to 7, which will not be particularly defined herein.

According to the embodiments of the present disclosure, the configuration module 901 is configured to configure the partial frequency bandwidth parameter for the UE, and indicates the UE to determine the start position parameter of the partial frequency bandwidth corresponding to each OFDM symbol in accordance with the relative index of the SRS symbol and the partial frequency bandwidth parameter configured by the network device, determine the start position in the SRS frequency-domain resource bandwidth corresponding to each OFDM symbol in accordance with the start position parameter, and transmit the SRS resource in accordance with the start position. Through configuring the partial frequency bandwidth parameter for the UE and dynamically changing the start position of the partial frequency bandwidth, the SRSs are transmitted on an entire uplink bandwidth. As a result, it is able to estimate channel information on the uplink bandwidth in accordance with the SRSs received on the entire bandwidth, thereby to improve the accuracy of the uplink channel estimation and the data transmission performance.

It should be appreciated that, the modules (units) in the embodiments of the present disclosure are for illustrative purposes, and they are provided merely on the basis of their logic functions. The modules may be integrated in a processing module, or physically separated from each other, or two or more modules may be integrated in one module. The integrated modules may be implemented in the form of hardware or a software functional module.

In the case that the functional modules are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be appreciated that, the above-mentioned device in the embodiments of the present disclosure is capable of implementing the steps of the above-mentioned method with a same technical effect, which will not be particularly defined herein.

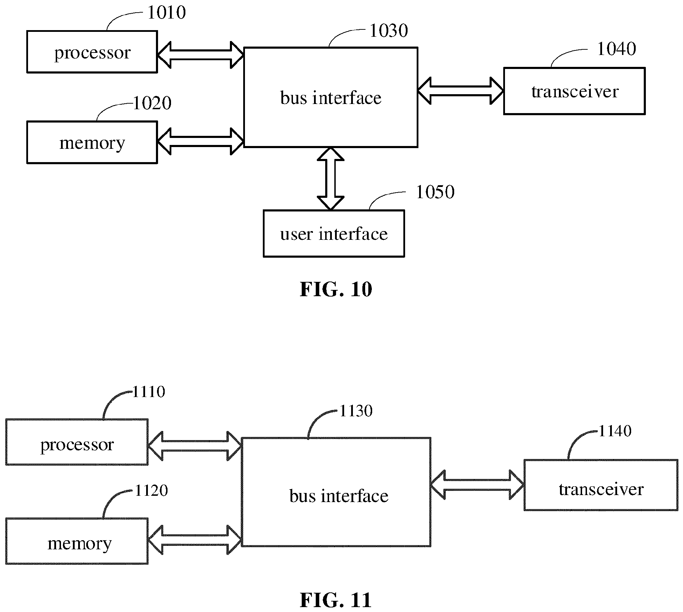

As shown in FIG. 10, the present disclosure further provides in some embodiments a UE, which includes a memory 1020, a transceiver 1040 and a processor 1010. The memory 1020 is configured to store therein a computer program. The transceiver 1040 is configured to receive and transmit data under the control of the processor 1010. The processor 1010 is configured to read the computer program in the memory 1020 so as to perform the following operations: determining a start position parameter of a partial frequency bandwidth corresponding to each OFDM symbol in accordance with a relative index of an SRS symbol and a partial frequency bandwidth parameter configured by a network device; and determining a start position in an SRS frequency-domain resource bandwidth corresponding to each OFDM symbol in accordance with each start position parameter, and transmitting an SRS resource in accordance with the start position.

In a possible embodiment of the present disclosure, the relative index of the SRS symbol indicates a position of an OFDM symbol for an SRS transmitted in each hop in SRS hopping transmission, or a position of an OFDM symbol for an SRS transmitted in SRS non-hopping transmission.

In a possible embodiment of the present disclosure, the partial frequency bandwidth parameter includes at least more than one of the quantity of repeated transmission symbols, a partial frequency bandwidth transmission factor, a start position index factor, or a resource bandwidth parameter.

In a possible embodiment of the present disclosure, the determining the start position parameter of the partial frequency bandwidth corresponding to each OFDM symbol in accordance with the relative index of the SRS symbol and the partial frequency bandwidth parameter configured by the network device includes: determining an index of an initial RB for the SRS resource in the SRS frequency-domain resource bandwidth corresponding to each OFDM symbol in accordance with the relative index of the SRS symbol and the partial frequency bandwidth parameter; and determining the start position parameter of the partial frequency bandwidth corresponding to each OFDM symbol in accordance with the index of the initial RB.

In a possible embodiment of the present disclosure, the determining the index of the initial RB for the SRS resource in the SRS frequency-domain resource bandwidth corresponding to each OFDM symbol in accordance with the relative index of the SRS symbol and the partial frequency bandwidth parameter includes determining the index of the initial RB in accordance with the relative index of the SRS symbol, the partial frequency bandwidth parameter and a target data relation, the target data relation includes a first data relation or a second data relation, the first data relation

includes $N_{offset} = \dfrac{\left(k_F + l'_{offset}\right) \bmod P_F}{P_F} m_{SRS, \ B_{SRS}}$ , where $N_{offset}$ represents the index of the initial RB, $l'_{offset}$ represents the relative index of the SRS symbol, mod represents a modulo operation, $m_{SRS, \ B_{SRS}}$ represents the resource bandwidth parameter, $P_F$ represents the partial frequency bandwidth transmission factor and $k_F$ represents the start position index factor, and the second data relation includes $N_{offset}$ =

$$\dfrac{\left(k_F + \left\lfloor \dfrac{l'_{offset}}{R} \right\rfloor + \left\lfloor \dfrac{N^{hop}_{symb}}{R} \right\rfloor * (i \bmod N_{max})\right) \bmod P_F}{P_F} m_{SRS, \ B_{SRS}}$$ , where i represents an $i^{th}$ transmission period for the

SRS resource, $N_{max}$ represents the maximum quantity of transmission periods, $N_{max}$ = $\left\lceil \dfrac{P_F R}{N^{hop}_{symb}} \right\rceil$, $\lceil x \rceil$ represents a round-up operation on x, $\lfloor x \rfloor$ represents a round-down operation on x, $N^{hop}_{symb}$ represents the quantity of OFDM symbols in each hop in each hopping transmission or the quantity of OFDM symbols included in each SRS resource in the non-hopping transmission, and R represents the quantity of repeated transmission symbols.

In a possible embodiment of the present disclosure, the determining the start position parameter of the partial frequency bandwidth corresponding to each OFDM symbol in accordance with the relative index of the SRS symbol and the partial frequency bandwidth parameter configured by the network device includes: receiving target indication information; and determining the start position parameter of the partial frequency bandwidth corresponding to each OFDM symbol in response to the target indication information in accordance with the relative index of the SRS symbol and the partial frequency bandwidth parameter configured by the network device. The target indication information is used to perform at least one of: indicating the UE to set the quantity of repeated transmission symbols as a first predetermined value; indicating the UE that a hopping function for the index of the initial RB is enabled; or indicating a value of the partial frequency bandwidth transmission factor.

In FIG. 10, bus architecture may include a number of buses and bridges connected to each other, so as to connect various circuits for one or more processors 1010 and one or more memories 1020. In addition, as is known in the art, the bus architecture may be used to connect any other circuits, such as a circuit for a peripheral device, a circuit for a voltage stabilizer and a power management circuit. A bus interface 1030 may be provided, and the transceiver 1040 may consist of a plurality of elements, i.e., a transmitter and a receiver for communication with any other devices over a transmission medium. The transmission medium includes a wireless channel, a wired channel, or an optical cable. The processor 1010 may take charge of managing the bus architecture as well as general processings. The memory 1020 may store therein data for the operation of the processor 1010. With respect to different UEs, a user interface 1050 may also be provided for devices which are to be arranged inside or outside the UE, and these devices may include but not limited to a keypad, a display, a speaker, a microphone and a joystick.

The processor 1010 is a Central Processing Unit (CPU), an Application Specific Integrated Circuit (ASIC), a Field-Programmable Gate Array (FPGA) or a Complex Programmable Logic Device (CPLD). The processor 1010 may also use multi-core architecture.

The processor 1010 is configured to call the computer program in the memory 1020, so as to implement the above-mentioned method in accordance with obtained executable instructions. The processor 1010 may also be physically separated from the memory 1020.

As shown in FIG. 11, the present disclosure further provides in some embodiments a network device, which includes a memory 1120, a transceiver 1140 and a processor 1110. The memory 1120 is configured to store therein a computer program. The transceiver 1140 is configured to receive and transmit data under the control of the processor 1110. The processor 1110 is configured to read the computer program in the memory 1120 so as to configure a partial frequency bandwidth parameter for a UE, and indicate the UE to determine a start position parameter of a partial frequency bandwidth corresponding to each OFDM symbol in accordance with a relative index of an SRS symbol and the partial frequency bandwidth parameter configured by a network device, determine a start position in an SRS frequency-domain resource bandwidth corresponding to each OFDM symbol in accordance with the start position parameter, and transmit an SRS resource in accordance with the start position.

In a possible embodiment of the present disclosure, the indicating the UE to determine the start position parameter of the partial frequency bandwidth corresponding to each OFDM symbol in accordance with the relative index of the SRS symbol and the partial frequency bandwidth parameter configured by the network device includes transmitting target indication information to the UE, the target indication information is used to indicate the UE to determine the start position parameter of the partial frequency bandwidth corresponding to each OFDM symbol in accordance with the relative index of the SRS symbol and the partial frequency bandwidth parameter configured by the network device, and the target indication information is used to perform at least one of: indicating the UE to set the quantity of repeated transmission symbols as a first predetermined value; indicating the UE that a hopping function for the index of the initial RB is enabled; or indicating a value of the partial frequency bandwidth transmission factor.

In a possible embodiment of the present disclosure, the target indication information is carried in at least one of RRC signaling, MAC-CE signaling or DCI signaling.

In a possible embodiment of the present disclosure, after the partial frequency bandwidth parameter is configured for the UE, the processor 1110 is configured to receive the SRS resource at the start position in the SRS frequency-domain resource bandwidth corresponding to each OFDM symbol.

In FIG. 11, bus architecture may include a number of buses and bridges connected to each other, so as to connect various circuits for one or more processors 1110 and one or more memories 1120. In addition, as is known in the art, the bus architecture may be used to connect any other circuits, such as a circuit for a peripheral device, a circuit for a voltage stabilizer and a power management circuit. A bus interface 1130 may be provided, and the transceiver 1140 may consist of a plurality of elements, i.e., a transmitter and a receiver for communication with any other devices over a transmission medium. The transmission medium includes a wireless channel, a wired channel, or an optical cable. The processor 1110 may take charge of managing the bus architecture as well as general processings. The memory 1120 may store therein data for the operation of the processor 1110.

The processor 1110 is a CPU, an ASIC, an FPGA or a CPLD. The processor 1110 may also use multi-core architecture.

The processor 1110 is configured to call the computer program in the memory 1120, so as to implement the above-mentioned method in accordance with obtained executable instructions. The processor 1110 may also be physically separated from the memory 1120.

It should be appreciated that, the UE and the network device in the embodiments of the present disclosure are capable of implementing the above-mentioned methods implemented by the UE and the network device respectively with a same technical effect, which will not be particularly defined herein.

The present disclosure further provides in some embodiments a processor-readable storage medium storing therein a computer program. The computer program is executed by a processor so as to implement the above-mentioned signal transmission method.

The processor-readable storage medium may be any available medium or data storage device capable of being accessed by the processor, which includes, but not limited to, a magnetic memory (e.g., floppy disk, hard disk, magnetic tape, or Magnetic Optical disk (MO)), an optical memory (e.g., Compact Disk (CD), Digital Video Disk (DVD), Blue-ray Disk (BD), or High-definition Versatile Disk (HVD)), or a semiconductor memory (e.g., ROM, Electrically Programmable ROM (EPROM), Electrically Erasable PROM (EEPROM), NAND flash, or Solid-State Disk (SSD)).

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory, Compact Disc-Read Only Memory (CD-ROM) and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

**Claims**

1.  A signal transmission method, comprising:

    determining a start position parameter of a partial frequency bandwidth corresponding to each Orthogonal Frequency Division Multiplexing (OFDM) symbol in accordance with a relative index of a Sounding Reference Signal (SRS) symbol and a partial frequency bandwidth parameter configured by a network device; and
    determining a start position in an SRS frequency-domain resource bandwidth corresponding to each OFDM symbol in accordance with each start position parameter, and transmitting an SRS resource in accordance with the start position.

2.  The signal transmission method according to claim 1, wherein the relative index of the SRS symbol indicates a position of an OFDM symbol for an SRS transmitted in each hop in SRS hopping transmission, or a position of an OFDM symbol for an SRS transmitted in SRS non-hopping transmission.

3.  The signal transmission method according to claim 1, wherein the partial frequency bandwidth parameter comprises at least more than one of the quantity of repeated transmission symbols, a partial frequency bandwidth transmission factor, a start position index factor, or a resource bandwidth parameter.

4.  The signal transmission method according to claim 3, wherein the determining the start position parameter of the partial frequency bandwidth corresponding to each OFDM symbol in accordance with the relative index of the SRS symbol and the partial frequency bandwidth parameter configured by the network device comprises:

    determining an index of an initial Resource Block (RB) for the SRS resource in the SRS frequency-domain resource bandwidth corresponding to each OFDM symbol in accordance with the relative index of the SRS symbol and the partial frequency bandwidth parameter; and
    determining the start position parameter of the partial frequency bandwidth corresponding to each OFDM symbol in accordance with the index of the initial RB.

5.  The signal transmission method according to claim 4, wherein the determining the index of the initial RB for the SRS resource in the SRS frequency-domain resource bandwidth corresponding to each OFDM symbol in accordance with the relative index of the SRS symbol and the partial frequency bandwidth parameter comprises determining the index of the initial RB in accordance with the relative index of the SRS symbol, the partial frequency bandwidth parameter and a target data relation, and the target data relation comprises a first data relation or a second data relation,

    wherein the first data relation comprises $N_{offset} = \dfrac{\left(k_F + l'_{offset}\right) \bmod P_F}{P_F} m_{SRS,\ B_{SRS}}$ , where $N_{offset}$ represents the index of the initial RB, $l'_{offset}$ represents the relative index of the SRS symbol, mod represents a modulo operation, $m_{SRS,\ B_{SRS}}$ represents the resource bandwidth parameter, $P_F$ represents the partial frequency bandwidth transmission factor and $k_F$ represents the start position index factor,
    wherein the second data relation comprises $N_{offset}$ =

$$\frac{\left(\left(k_F+\left\lfloor\frac{l'_{offset}}{R}\right\rfloor+\left\lfloor\frac{N_{symb}^{hop}}{R}\right\rfloor*(i \bmod N_{max})\right) \bmod P_F}{P_F}\right. m_{SRS, B_{SRS}}$$ , where i represents an i<sup>th</sup> transmission period

for the SRS resource, $N_{max}$ represents the maximum quantity of transmission periods, $N_{max} = \left\lceil \frac{P_F R}{N_{symb}^{hop}} \right\rceil$, $\lceil x \rceil$

represents a round-up operation on x, $\lfloor x \rfloor$ represents a round-down operation on x, $N_{symb}^{hop}$ represents the quantity of OFDM symbols in each hop in each hopping transmission or the quantity of OFDM symbols comprised in each SRS resource in the non-hopping transmission, and R represents the quantity of repeated transmission symbols.

6. The signal transmission method according to any one of claims 3 to 5, wherein prior to determining the start position parameter of the partial frequency bandwidth corresponding to each OFDM symbol in accordance with the relative index of the SRS symbol and the partial frequency bandwidth parameter configured by the network device, the signal transmission method further comprises receiving target indication information,

wherein the target indication information is used to perform at least one of: indicating a User Equipment (UE) to set the quantity of repeated transmission symbols as a first predetermined value; indicating the UE that a hopping function for the index of the initial RB is enabled; or indicating a value of the partial frequency bandwidth transmission factor.

7. A signal transmission method, comprising:

configuring a partial frequency bandwidth parameter for a User Equipment (UE); and
indicating the UE to determine a start position parameter of a partial frequency bandwidth corresponding to each Orthogonal Frequency Division Multiplexing (OFDM) symbol in accordance with a relative index of a Sounding Reference Signal (SRS) symbol and the partial frequency bandwidth parameter configured by a network device, determine a start position in an SRS frequency-domain resource bandwidth corresponding to each OFDM symbol in accordance with the start position parameter, and transmit an SRS resource in accordance with the start position.

8. The signal transmission method according to claim 7, wherein the partial frequency bandwidth parameter comprises at least more than one of the quantity of repeated transmission symbols, a partial frequency bandwidth transmission factor, a start position index factor, or a resource bandwidth parameter.

9. The signal transmission method according to claim 7 or 8, wherein there is a target data relation among the relative index of the SRS symbol, the partial frequency bandwidth parameter and the index of the initial RB, and the target data relation comprises a first data relation or a second data relation,

$$N_{offset} = \frac{\left(k_F+l'_{offset}\right) \bmod P_F}{P_F} m_{SRS, B_{SRS}}$$

wherein the first data relation comprises , where $N_{offset}$ rep-

resents the index of the initial RB, $l'_{offset}$ represents the relative index of the SRS symbol, mod represents a modulo operation, $m_{SRS, B_{SRS}}$ represents the resource bandwidth parameter, $P_F$ represents the partial frequency bandwidth transmission factor and $k_F$ represents the start position index factor,

wherein     the     second     data     relation     comprises     $N_{offset}$     =

$$\frac{\left(k_F + \left\lfloor \dfrac{l'_{offset}}{R} \right\rfloor + \left\lfloor \dfrac{N_{symb}^{hop}}{R} \right\rfloor * (i \bmod N_{max})\right) \bmod P_F}{P_F} m_{SRS,\ B_{SRS}}$$ , where i represents an $i^{th}$ transmission period for the SRS resource, $N_{max}$ represents the maximum quantity of transmission periods, $N_{max} = \left\lceil \dfrac{P_F R}{N_{symb}^{hop}} \right\rceil$, $\lceil x \rceil$ represents a round-up operation on x, $\lfloor x \rfloor$ represents a round-down operation on x, $N_{symb}^{hop}$ represents the quantity of OFDM symbols in each hop in each hopping transmission or the quantity of OFDM symbols comprised in each SRS resource in the non-hopping transmission, and $R$ represents the quantity of repeated transmission symbols.

10. The signal transmission method according to claim 7, wherein the indicating the UE to determine the start position parameter of the partial frequency bandwidth corresponding to each OFDM symbol in accordance with the relative index of the SRS symbol and the partial frequency bandwidth parameter configured by the network device comprises transmitting target indication information to the UE, and the target indication information is used to indicate the UE to determine the start position parameter of the partial frequency bandwidth corresponding to each OFDM symbol in accordance with the relative index of the SRS symbol and the partial frequency bandwidth parameter configured by the network device,
wherein the target indication information is used to perform at least one of: indicating the UE to set the quantity of repeated transmission symbols as a first predetermined value; indicating the UE that a hopping function for the index of the initial RB is enabled; or indicating a value of the partial frequency bandwidth transmission factor.

11. The signal transmission method according to claim 10, wherein the target indication information is carried in at least one of Radio Resource Control (RRC) signaling, Medium Access Control Control Element (MAC-CE) signaling or Downlink Control Information (DCI) signaling.

12. The signal transmission method according to any one of claims 7 to 11, wherein subsequent to configuring the partial frequency bandwidth parameter for the UE, the signal transmission method further comprises receiving the SRS resource at the start position in the SRS frequency-domain resource bandwidth corresponding to each OFDM symbol.

13. A User Equipment (UE), comprising a memory, a transceiver and a processor, wherein the memory is configured to store therein a computer program, and the transceiver is configured to transmit and receive data under the control of the processor, wherein the processor is configured to read the computer program in the memory to perform the following operations:

determining a start position parameter of a partial frequency bandwidth corresponding to each Orthogonal Frequency Division Multiplexing (OFDM) symbol in accordance with a relative index of a Sounding Reference Signal (SRS) symbol and a partial frequency bandwidth parameter configured by a network device; and
determining a start position in an SRS frequency-domain resource bandwidth corresponding to each OFDM symbol in accordance with each start position parameter, and transmitting an SRS resource in accordance with the start position.

14. The UE according to claim 13, wherein the relative index of the SRS symbol indicates a position of an OFDM symbol for an SRS transmitted in each hop in SRS hopping transmission, or a position of an OFDM symbol for an SRS transmitted in SRS non-hopping transmission.

15. The UE according to claim 13, wherein the partial frequency bandwidth parameter comprises at least more than one of the quantity of repeated transmission symbols, a partial frequency bandwidth transmission factor, a start position index factor, or a resource bandwidth parameter.

16. The UE according to claim 13, wherein the determining the start position parameter of the partial frequency bandwidth corresponding to each OFDM symbol in accordance with the relative index of the SRS symbol and the partial frequency bandwidth parameter configured by the network device comprises:

determining an index of an initial RB for the SRS resource in the SRS frequency-domain resource bandwidth corresponding to each OFDM symbol in accordance with the relative index of the SRS symbol and the partial frequency bandwidth parameter; and

determining the start position parameter of the partial frequency bandwidth corresponding to each OFDM symbol in accordance with the index of the initial RB.

17. The UE according to claim 16, wherein the determining the index of the initial RB for the SRS resource in the SRS frequency-domain resource bandwidth corresponding to each OFDM symbol in accordance with the relative index of the SRS symbol and the partial frequency bandwidth parameter comprises determining the index of the initial RB in accordance with the relative index of the SRS symbol, the partial frequency bandwidth parameter and a target data relation, and the target data relation comprises a first data relation or a second data relation,

wherein the first data relation comprises $N_{offset} = \dfrac{\left(k_F + l'_{offset}\right) \bmod P_F}{P_F} m_{SRS,\ B_{SRS}}$, where $N_{offset}$ represents the index of the initial RB, $l'_{offset}$ represents the relative index of the SRS symbol, mod represents a modulo operation, $m_{SRS,\ B_{SRS}}$ represents the resource bandwidth parameter, $P_F$ represents the partial frequency bandwidth transmission factor and $k_F$ represents the start position index factor,

wherein the second data relation comprises $N_{offset} = \dfrac{\left(k_F + \left\lfloor \dfrac{l'_{offset}}{R} \right\rfloor + \left\lfloor \dfrac{N^{hop}_{symb}}{R} \right\rfloor * (i \bmod N_{max})\right) \bmod P_F}{P_F} m_{SRS,\ B_{SRS}}$, where i represents an $i^{th}$ transmission period for the SRS resource, $N_{max}$ represents the maximum quantity of transmission periods, $N_{max} = \left\lceil \dfrac{P_F R}{N^{hop}_{symb}} \right\rceil$, $\lceil x \rceil$ represents a round-up operation on x, $\lfloor x \rfloor$ represents a round-down operation on x, $N^{hop}_{symb}$ represents the quantity of OFDM symbols in each hop in each hopping transmission or the quantity of OFDM symbols comprised in each SRS resource in the non-hopping transmission, and R represents the quantity of repeated transmission symbols.

18. The UE according to any one of claims 13 to 17, wherein prior to determining the start position parameter of the partial frequency bandwidth corresponding to each OFDM symbol in accordance with the relative index of the SRS symbol and the partial frequency bandwidth parameter configured by the network device, the processor is further configured to receive target indication information,

wherein the target indication information is used to perform at least one of: indicating the UE to set the quantity of repeated transmission symbols as a first predetermined value; indicating the UE that a hopping function for the index of the initial RB is enabled; or indicating a value of the partial frequency bandwidth transmission factor.

19. A network device, comprising a memory, a transceiver and a processor, wherein the memory is configured to store therein a computer program, and the transceiver is configured to transmit and receive data under the control of the processor, wherein the processor is configured to read the computer program in the memory to perform the following operations:

configuring a partial frequency bandwidth parameter for a User Equipment (UE); and

indicating the UE to determine a start position parameter of a partial frequency bandwidth corresponding to each Orthogonal Frequency Division Multiplexing (OFDM) symbol in accordance with a relative index of a Sounding Reference Signal (SRS) symbol and the partial frequency bandwidth parameter configured by a network device, determine a start position in an SRS frequency-domain resource bandwidth corresponding to each OFDM symbol in accordance with the start position parameter, and transmit an SRS resource in accordance with the start position.

20. The network device according to claim 19, wherein the partial frequency bandwidth parameter comprises at least more than one of the quantity of repeated transmission symbols, a partial frequency bandwidth transmission factor, a start position index factor, or a resource bandwidth parameter.

21. The network device according to claim 19 or 20, wherein there is a target data relation among the relative index of the SRS symbol, the partial frequency bandwidth parameter and the index of the initial RB, and the target data relation comprises a first data relation or a second data relation,

wherein the first data relation comprises $N_{offset} = \frac{\left(k_F + l'_{offset}\right) \bmod P_F}{P_F} m_{SRS,\ B_{SRS}}$ , where $N_{offset}$ represents the index of the initial RB, $l'_{offset}$ represents the relative index of the SRS symbol, mod represents a modulo operation, $m_{SRS,\ B_{SRS}}$ represents the resource bandwidth parameter, $P_F$ represents the partial frequency bandwidth transmission factor and $k_F$ represents the start position index factor,

wherein the second data relation comprises $N_{offset} =$

$$\frac{\left(\left(k_F + \left\lceil \frac{l'_{offset}}{R} \right\rceil + \left\lfloor \frac{N_{symb}^{hop}}{R} \right\rfloor * (i \bmod N_{max})\right) \bmod P_F\right)}{P_F} m_{SRS,\ B_{SRS}}$$ , where i represents an $i^{th}$ transmission period for the SRS resource, $N_{max}$ represents the maximum quantity of transmission periods, $N_{max} = \left\lceil \frac{P_F R}{N_{symb}^{hop}} \right\rceil$, $\lceil x \rceil$ represents a round-up operation on x, $\lfloor x \rfloor$ represents a round-down operation on x, $N_{symb}^{hop}$ represents the quantity of OFDM symbols in each hop in each hopping transmission or the quantity of OFDM symbols comprised in each SRS resource in the non-hopping transmission, and R represents the quantity of repeated transmission symbols.

22. The network device according to claim 19, wherein when the UE is indicated to determine the start position parameter of the partial frequency bandwidth corresponding to each OFDM symbol in accordance with the relative index of the SRS symbol and the partial frequency bandwidth parameter configured by the network device, the processor is configured to transmit target indication information to the UE, and the target indication information is used to indicate the UE to determine the start position parameter of the partial frequency bandwidth corresponding to each OFDM symbol in accordance with the relative index of the SRS symbol and the partial frequency bandwidth parameter configured by the network device,

wherein the target indication information is used to perform at least one of: indicating the UE to set the quantity of repeated transmission symbols as a first predetermined value; indicating the UE that a hopping function for the index of the initial RB is enabled; or indicating a value of the partial frequency bandwidth transmission factor.

23. The network device according to claim 22, wherein the target indication information is carried in at least one of RRC signaling, MAC-CE signaling or DCI signaling.

24. The network device according to any one of claims 19 to 23, wherein after the partial frequency bandwidth parameter is configured for the UE, the processor is configured to receive the SRS resource at the start position in the SRS frequency-domain resource bandwidth corresponding to each OFDM symbol.

25. A signal transmission device, comprising:

a parameter determination module configured to determine a start position parameter of a partial frequency bandwidth corresponding to each Orthogonal Frequency Division Multiplexing (OFDM) symbol in accordance with a relative index of a Sounding Reference Signal (SRS) symbol and a partial frequency bandwidth parameter configured by a network device; and
a position determination module configured to determine a start position in an SRS frequency-domain resource bandwidth corresponding to each OFDM symbol in accordance with each start position parameter, and transmit an SRS resource in accordance with the start position.

26. The signal transmission device according to claim 25, wherein the relative index of the SRS symbol indicates a position of an OFDM symbol for an SRS transmitted in each hop in SRS hopping transmission, or a position of an OFDM symbol for an SRS transmitted in SRS non-hopping transmission.

27. The signal transmission device according to claim 25, wherein the partial frequency bandwidth parameter comprises at least more than one of the quantity of repeated transmission symbols, a partial frequency bandwidth transmission factor, a start position index factor, or a resource bandwidth parameter.

28. The signal transmission device according to any one of claims 25 to 27, wherein when determining the start position parameter of the partial frequency bandwidth corresponding to each OFDM symbol in accordance with the relative index of the SRS symbol and the partial frequency bandwidth parameter configured by the network device, the parameter determination module comprises:

a first determination sub-module configured to determine an index of an initial Resource Block (RB) for the SRS resource in the SRS frequency-domain resource bandwidth corresponding to each OFDM symbol in accordance with the relative index of the SRS symbol and the partial frequency bandwidth parameter; and
a second determination sub-module configured to determine the start position parameter of the partial frequency bandwidth corresponding to each OFDM symbol in accordance with the index of the initial RB.

29. The signal transmission device according to claim 28, wherein when determining the index of the initial RB for the SRS resource in the SRS frequency-domain resource bandwidth corresponding to each OFDM symbol in accordance with the relative index of the SRS symbol and the partial frequency bandwidth parameter, the first determination sub-module is configured to determine the index of the initial RB in accordance with the relative index of the SRS symbol, the partial frequency bandwidth parameter and a target data relation, and the target data relation comprises a first data relation or a second data relation,

$$N_{offset} = \frac{\left(k_F + l'_{offset}\right) \bmod P_F}{P_F} m_{SRS, \; B_{SRS}}$$

wherein the first data relation comprises , where $N_{offset}$ represents the index of the initial RB, $l'_{offset}$ represents the relative index of the SRS symbol, mod represents a modulo operation, $m_{SRS, \; B_{SRS}}$ represents the resource bandwidth parameter, $P_F$ represents the partial frequency bandwidth transmission factor and $k_F$ represents the start position index factor,

wherein the second data relation comprises $N_{offset} =$

$$\frac{\left(k_F + \left\lfloor \frac{l'_{offset}}{R} \right\rfloor + \left\lfloor \frac{N_{symb}^{hop}}{R} \right\rfloor * (i \bmod N_{max})\right) \bmod P_F}{P_F} m_{SRS, \; B_{SRS}}$$

, where i represents an i-th transmission period for the SRS resource, $N_{max}$ represents the maximum quantity of transmission periods, $N_{max} = \left\lceil \frac{P_F R}{N_{symb}^{hop}} \right\rceil$, $\lceil x \rceil$ represents a round-up operation on x, $\lfloor x \rfloor$ represents a round-down operation on x, $N_{symb}^{hop}$ represents the quantity of OFDM symbols in each hop in each hopping transmission or the quantity of OFDM symbols comprised in each SRS resource in the non-hopping transmission, and R represents the quantity of repeated transmission symbols.

30. The signal transmission device according to any one of claims 25 to 29, wherein when determining the start position parameter of the partial frequency bandwidth corresponding to each OFDM symbol in accordance with the relative index of the SRS symbol and the partial frequency bandwidth parameter configured by the network device, the parameter determination module comprises:

a reception sub-module configured to receive target indication information; and
a response sub-module configured to determine the start position parameter of the partial frequency bandwidth corresponding to each OFDM symbol in response to the target indication information in accordance with the relative index of the SRS symbol and the partial frequency bandwidth parameter configured by the network device,

wherein the target indication information is used to perform at least one of: indicating a UE to set the quantity of repeated transmission symbols as a first predetermined value; indicating the UE that a hopping function for the index of the initial RB is enabled; or indicating a value of the partial frequency bandwidth transmission factor.

31. A signal transmission device, comprising a configuration module configured to configure a partial frequency bandwidth parameter for a User Equipment (UE), and indicate the UE to determine a start position parameter of a partial frequency bandwidth corresponding to each Orthogonal Frequency Division Multiplexing (OFDM) symbol in accordance with a relative index of a Sounding Reference Signal (SRS) symbol and the partial frequency bandwidth parameter configured by a network device, determine a start position in an SRS frequency-domain resource bandwidth corresponding to each OFDM symbol in accordance with the start position parameter, and transmit an SRS resource in accordance with the start position.

32. The signal transmission device according to claim 31, wherein the partial frequency bandwidth parameter comprises at least more than one of the quantity of repeated transmission symbols, a partial frequency bandwidth transmission factor, a start position index factor, or a resource bandwidth parameter.

33. The signal transmission device according to claim 31 or 32, wherein there is a target data relation among the relative index of the SRS symbol, the partial frequency bandwidth parameter and the index of the initial RB, and the target data relation comprises a first data relation or a second data relation,

wherein the first data relation comprises $N_{offset} = \dfrac{\left(k_F + l'_{offset}\right) \bmod P_F}{P_F} m_{SRS,\ B_{SRS}}$ , where $N_{offset}$ represents the index of the initial RB, $l'_{offset}$ represents the relative index of the SRS symbol, mod represents a modulo operation, $m_{SRS,\ B_{SRS}}$ represents the resource bandwidth parameter, $P_F$ represents the partial frequency bandwidth transmission factor and $k_F$ represents the start position index factor,

wherein the second data relation comprises $N_{offset} = \dfrac{\left(k_F + \left\lfloor \dfrac{l'_{offset}}{R} \right\rfloor + \left\lfloor \dfrac{N^{hop}_{symb}}{R} \right\rfloor * (i \bmod N_{max})\right) \bmod P_F}{P_F} m_{SRS,\ B_{SRS}}$ , where i represents an $i^{th}$ transmission period for the SRS resource, $N_{max}$ represents the maximum quantity of transmission periods, $N_{max} = \left\lceil \dfrac{P_F R}{N^{hop}_{symb}} \right\rceil$, $\lceil x \rceil$ represents a round-up operation on x, $\lfloor x \rfloor$ represents a round-down operation on x, $N^{hop}_{symb}$ represents the quantity of OFDM symbols in each hop in each hopping transmission or the quantity of OFDM symbols comprised in each SRS resource in the non-hopping transmission, and R represents the quantity of repeated transmission symbols.

34. The signal transmission device according to claim 31, wherein the configuration module comprises an indication sub-module configured to transmit target indication information to the UE, and the target indication information is used to indicate the UE to determine the start position parameter of the partial frequency bandwidth corresponding to each OFDM symbol in accordance with the relative index of the SRS symbol and the partial frequency bandwidth parameter configured by the network device,
wherein the target indication information is used to perform at least one of: indicating the UE to set the quantity of repeated transmission symbols as a first predetermined value; indicating the UE that a hopping function for the index of the initial RB is enabled; or indicating a value of the partial frequency bandwidth transmission factor.

35. The signal transmission device according to claim 34, wherein the target indication information is carried in at least one of RRC signaling, MAC-CE signaling or DCI signaling.

36. The signal transmission device according to any one of claims 31 to 35, wherein the signal transmission device comprises an SRS reception module configured to receive the SRS resource at the start position in the SRS frequency-domain resource bandwidth corresponding to each OFDM symbol.

37. A processor-readable storage medium storing therein a computer program, wherein the computer program is executed by a processor so as to implement the signal transmission method according to any one of claims 1 to 12.

determining a start position parameter of a partial frequency bandwidth corresponding to each OFDM symbol in accordance with a relative index of an SRS symbol and a partial frequency bandwidth parameter configured by a network device — 101

determining a start position in an SRS frequency-domain resource bandwidth corresponding to each OFDM symbol in accordance with each start position parameter, and transmitting an SRS resource in accordance with the start position — 102

**FIG. 1**

Legends:

▨ SRS resource 1

▥ SRS resource 2

▧ SRS resource 3

**FIG. 2**

**FIG. 3**

**FIG. 4**

**FIG. 5**

**FIG. 6**

configuring a partial frequency bandwidth parameter for a UE, and indicating the UE to determine a start position parameter of a partial frequency bandwidth corresponding to each OFDM symbol in accordance with a relative index of an SRS symbol and the partial frequency bandwidth parameter configured by a network device, determine a start position in an SRS frequency-domain resource bandwidth corresponding to each OFDM symbol in accordance with the start position parameter, and transmit an SRS resource in accordance with the start position

701

**FIG. 7**

parameter determination module 801

position determination module 802

**FIG. 8**

configuration module 901

**FIG. 9**

FIG. 10

FIG. 11

## INTERNATIONAL SEARCH REPORT

| International application No. |
|---|
| **PCT/CN2022/110054** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNPAT, WPI, EPODOC, IEEE, CNKI, 3GPP: 正交频分复用, 探测参考信号, 起始, 开始, 位置, 带宽, 索引, 符号, 跳频, OFDM, SRS, sounding reference signal, start+, initial, location, position, BWP, index, symbol, frequency hopping

**C. DOCUMENTS CONSIDERED TO BE RELEVANT**

| Category* | Citation of document, with indication, where appropriate, of the relevant passages | Relevant to claim No. |
|---|---|---|
| X | CN 113067689 A (OPPO GUANGDONG MOBILE TELECOMMUNICATIONS CO., LTD.) 02 July 2021 (2021-07-02) description, paragraphs 0076-0258 | 1-4, 6-8, 10-16, 18-20, 22-28, 30-32, 34-37 |
| A | CN 113067689 A (OPPO GUANGDONG MOBILE TELECOMMUNICATIONS CO., LTD.) 02 July 2021 (2021-07-02) entire document | 5, 9, 17, 21, 29, 33 |
| A | CN 110546913 A (LG ELECTRONICS INC.) 06 December 2019 (2019-12-06) entire document | 1-37 |
| A | CN 112565151 A (HUAWEI TECHNOLOGIES CO., LTD.) 26 March 2021 (2021-03-26) entire document | 1-37 |
| A | US 2010067410 A1 (SAMSUNG ELECTRONICS CO., LTD.) 18 March 2010 (2010-03-18) entire document | 1-37 |
| A | US 2020280404 A1 (HUAWEI TECHNOLOGIES CO., LTD.) 03 September 2020 (2020-09-03) entire document | 1-37 |
| A | WO 2020032571 A1 (LG ELECTRONICS INC.) 13 February 2020 (2020-02-13) entire document | 1-37 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 September 2022** | **27 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2022/110054** |

**C.      DOCUMENTS CONSIDERED TO BE RELEVANT**

| Category* | Citation of document, with indication, where appropriate, of the relevant passages | Relevant to claim No. |
|---|---|---|
| A | ERICSSON. "UL Reference Signals for NR Positioning"<br>*3GPP TSG-RAN WG1 Meeting #98bis, R1-1911229*, 20 October 2019 (2019-10-20),<br>entire document | 1-37 |
| A | HUAWEI et al. "Remaining Details of SRS Design."<br>*3GPP TSG RAN WG1 Meeting #91, R1-1719441*, 01 December 2017 (2017-12-01),<br>entire document | 1-37 |

Form PCT/ISA/210 (second sheet) (January 2015)

| INTERNATIONAL SEARCH REPORT | International application No. |
| :---: | :---: |
| Information on patent family members | **PCT/CN2022/110054** |

| Patent document cited in search report | | | Publication date (day/month/year) | Patent family member(s) | | | Publication date (day/month/year) |
| :---: | :---: | :---: | :---: | :---: | :---: | :---: | :---: |
| CN | 113067689 | A | 02 July 2021 | CA | 3050336 | A1 | 26 July 2018 |
| | | | | WO | 2018132945 | A1 | 26 July 2018 |
| | | | | TW | 201828624 | A | 01 August 2018 |
| | | | | AU | 2017393966 | A1 | 22 August 2019 |
| | | | | ID | 201906116 | A | 23 August 2019 |
| | | | | CN | 110178434 | A | 27 August 2019 |
| | | | | SG | 11201906603 | A1 | 27 August 2019 |
| | | | | KR | 20190103291 | A | 04 September 2019 |
| | | | | IN | 201917031266 | A | 06 September 2019 |
| | | | | MX | 2019008477 | A1 | 18 September 2019 |
| | | | | VN | 66497 | A | 25 October 2019 |
| | | | | EP | 3565356 | A1 | 06 November 2019 |
| | | | | US | 2019372805 | A1 | 05 December 2019 |
| | | | | PH | 12019501659 | A1 | 09 March 2020 |
| | | | | JP | 2020509630 | W | 26 March 2020 |
| | | | | BR | 112019014649 | A2 | 14 April 2020 |
| | | | | ZA | 201905085 | A | 27 May 2020 |
| | | | | RU | 2725762 | C1 | 06 July 2020 |
| | | | | HK | 40011738 | A0 | 17 July 2020 |
| | | | | US | 2022021561 | A1 | 20 January 2022 |
| | | | | ES | 2892965 | T3 | 07 February 2022 |
| | | | | EP | 3893584 | A1 | 13 October 2021 |
| CN | 110546913 | A | 06 December 2019 | PH | 12019501060 | A1 | 16 December 2019 |
| | | | | RU | 2719330 | C1 | 17 April 2020 |
| | | | | US | 2019109732 | A1 | 11 April 2019 |
| | | | | SG | 11201902808 X | A | 30 May 2019 |
| | | | | EP | 3618335 | A1 | 04 March 2020 |
| | | | | CL | 2019000950 | A1 | 26 July 2019 |
| | | | | BR | 112019009928 | A2 | 05 November 2019 |
| | | | | JP | 2020504933 | A | 13 February 2020 |
| | | | | CA | 3040859 | A1 | 01 November 2018 |
| | | | | KR | 20190072680 | A | 25 June 2019 |
| | | | | MX | 2019005327 | A | 12 August 2019 |
| | | | | US | 2020295973 | A1 | 17 September 2020 |
| | | | | WO | 2018199696 | A1 | 01 November 2018 |
| | | | | KR | 20180135872 | A | 21 December 2018 |
| | | | | AU | 2018256714 | A1 | 18 April 2019 |
| | | | | ID | 201904591 | A | 28 June 2019 |
| | | | | VN | 67805 | A | 30 January 2020 |
| | | | | IN | 201927015351 | A | 21 February 2020 |
| CN | 112565151 | A | 26 March 2021 | WO | 2016179834 | A1 | 17 November 2016 |
| | | | | CN | 107534986 | A | 02 January 2018 |
| | | | | EP | 3285533 | A1 | 21 February 2018 |
| | | | | US | 2018076946 | A1 | 15 March 2018 |
| | | | | EP | 3813464 | A1 | 28 April 2021 |
| US | 2010067410 | A1 | 18 March 2010 | CN | 101651469 | A | 17 February 2010 |
| | | | | EP | 3416330 | A1 | 19 December 2018 |
| | | | | WO | 2010019012 | A2 | 18 February 2010 |
| | | | | RU | 2011105438 | A | 20 August 2012 |
| | | | | EP | 2479919 | A1 | 25 July 2012 |

Form PCT/ISA/210 (patent family annex) (January 2015)

**INTERNATIONAL SEARCH REPORT**
Information on patent family members

International application No.

**PCT/CN2022/110054**

| Patent document cited in search report | | | Publication date (day/month/year) | Patent family member(s) | | | Publication date (day/month/year) |
|---|---|---|---|---|---|---|---|
| | | | | RU | 2013143099 | A | 27 March 2015 |
| | | | | JP | 2012500510 | A | 05 January 2012 |
| | | | | US | 2012063371 | A1 | 15 March 2012 |
| | | | | ES | 2575002 | T3 | 23 June 2016 |
| | | | | EP | 2154811 | A2 | 17 February 2010 |
| | | | | JP | 2014068398 | A | 17 April 2014 |
| | | | | HK | 1138682 | A1 | 11 April 2014 |
| US | 2020280404 | A1 | 03 September 2020 | WO | 2019096244 | A1 | 23 May 2019 |
| | | | | EP | 3713335 | A1 | 23 September 2020 |
| | | | | BR | 112020009723 | A2 | 03 November 2020 |
| | | | | CN | 109802810 | A | 24 May 2019 |
| | | | | US | 2022209908 | A1 | 30 June 2022 |
| | | | | IN | 202037024231 | A | 24 July 2020 |
| | | | | VN | 73120 | A | 25 September 2020 |
| | | | | CN | 113660188 | A | 16 November 2021 |
| WO | 2020032571 | A1 | 13 February 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110927259